# EUROPEAN PATENT APPLICATION

(11) **EP 4 383 298 A1**
(43) Date of publication of application: **12.06.2024**
(21) Application number: 22853201.6
(22) Date of filing: 05.08.2022
(51) Int. Cl.: H01G 11/74, H01G 11/78, H01G 11/80, H01G 11/82, H01G 11/84, H01M 10/04, H01M 50/105, H01M 50/129, H01M 50/131, H01M 50/133, H01M 50/159, H01M 50/178, H01M 50/545, H01M 50/548, H01M 50/566

(54) **POWER STORAGE DEVICE AND METHOD FOR PRODUCING POWER STORAGE DEVICE**

(30) Priority: 06.08.2021 JP 2021130360; 14.04.2022 JP 2022067243
(71) Applicant: DAI NIPPON PRINTING CO., LTD., Tokyo 162-8001 (JP)
(72) Inventor: SASAKI, Miho, Tokyo 162-8001 (JP); AMANO, Makoto, Tokyo 162-8001 (JP); UCHIDA, Mayu, Tokyo 162-8001 (JP); URIU, Toshibumi, Tokyo 162-8001 (JP); MIYASHIRO, Kae, Tokyo 162-8001 (JP)
(74) Representative: Müller-Boré & Partner Patentanwälte PartG mbB
(86) International application number: PCT/JP2022/030197
(87) International publication number: WO 2023/013783

(57) **Abstract**

This power storage device is provided with an electrode body and an exterior body in which the electrode body is sealed. The exterior body is constituted of a film-like exterior member. The exterior body includes a first seal part that is sealed by the joining of opposing faces of the exterior member wrapped around the electrode body. The area of a first face is larger than the area of a second face. The first seal part does not overlap the first face in plan view.

## Description

### TECHNICAL FIELD

The present invention relates to an electrical storage device, and a method for manufacturing an electrical storage device.

### BACKGROUND ART

Japanese Patent No. 4509242 (Patent Document 1) discloses a secondary battery. In this secondary battery, an electrode assembly is sealed in a bag formed of a laminate film (see Patent Document 1).

### PRIOR ART DOCUMENT

### PATENT DOCUMENT

Patent Document 1: Japanese Patent No. 4509242

### SUMMARY OF THE INVENTION

### PROBLEMS TO BE SOLVED BY THE INVENTION

In the secondary battery disclosed in Patent Document 1, a seal portion of a laminate film is provided on a surface having a large area. Since the seal portion is a region where the laminate films are stacked, the seal portion is thicker than other regions. If another secondary battery is stacked on a surface provided with the seal portion, the upper secondary battery may tilt while being supported on the sealed portion. As a result, the unevenness of the distribution of pressure applied to the lower secondary battery increases. If a plurality of secondary batteries are arranged in a lateral direction such that a surface provided with a seal portion is in contact with the adjacent secondary battery, the unevenness of the distribution of pressure applied from the adjacent secondary battery increases.

The present invention has been made for solving the above-described problems, and an object of the present invention is to provide an electrical storage device which enables suppression of unevenness of the distribution of pressure applied to an adjacent electrical storage device when a plurality of electrical storage devices are stacked, and a method for manufacturing the electrical storage device.

### MEANS FOR SOLVING THE PROBLEM

An electrical storage device according to a first aspect of the present invention includes an electrode assembly and an outer packaging. The outer packaging seals the electrode assembly. The outer packaging includes a film-shaped exterior member. The outer packaging includes a first seal portion sealed by joining the opposed surfaces of the exterior member wound around the electrode assembly, a first surface, and a second surface. An area of the first surface is larger than an area of the second surface. The first seal portion does not overlap the first surface in plan view.

In this electrical storage device, the first seal portion does not overlap the first surface with a large area in plan view. That is, the first seal portion does not exist on the first surface with a large area. Therefore, even if just above or beside the electrical storage device, another electrical storage device is disposed on the first surface, the other electrical storage device does not tilt. As a result, the electrical storage device enables suppression of unevenness of the distribution of pressure applied to an adjacent electrical storage device when a plurality of electrical storage devices are stacked.

An electrical storage device according to a second aspect of the present invention may be the electrical storage device according to the first aspect, in which the first seal portion is bent so as to come into contact with the second surface.

An electrical storage device according to a third aspect of the present invention may be the electrical storage device according to the second aspect, in which the first seal portion covers substantially the entire second surface in a state of being bent so as to come into contact with the second surface.

In this electrical storage device, a large connection width can be secured in the first seal portion because the first seal portion covers substantially the entire second surface.

An electrical storage device according to a fourth aspect of the present invention may be the electrical storage device according to any one of the first to third aspects, further including an electrode terminal electrically connected to the electrode assembly, in which the outer packaging further includes a second seal portion sealed with the electrode terminal held therein, a part of the electrode terminal is located outside the outer packaging, and a root of the part is located to extend over substantially half a thickness of the electrical storage device in a thickness direction of the electrical storage device.

In this electrical storage device, a part of the electrode terminal, which is outside the outer packaging, is located to extend over substantially half the thickness of the electrical storage device in the thickness direction of the electrical storage device. Therefore, in this electrical storage device, for example, it is possible to reduce a difference between the longest and the shortest of distances between a plurality of electrodes in the electrode assembly and the electrode terminal as compared to a case where the part outside the outer packaging is substantially identical in location to the first surface in the thickness direction of the electrical storage device.

An electrical storage device according to a fifth aspect of the present invention may be the electrical storage device according to any one of the first to fourth aspects, in which a region with a high joining force between the surfaces and a region with a low joining force between the surfaces are arranged along a boundary between the first surface and the second surface in the first seal portion.

An electrical storage device according to a sixth aspect of the present invention may be the electrical storage device according to any one of the first to fourth aspects, in which a region with a large thickness and a region with a small thickness are arranged along a boundary between the first surface and the second surface in the first seal portion.

An electrical storage device according to a seventh aspect of the present invention may be the electrical storage device according to any one of the first to third aspects, further including an electrode terminal electrically connected to the electrode assembly, in which the first seal portion is sealed with the electrode terminal held therein.

An electrical storage device according to an eighth aspect of the present invention may be the electrical storage device according to any one of the first to third aspects, further including an electrode terminal electrically connected to the electrode assembly, and a lid to which the electrode terminal is attached, and the outer packaging further includes a second seal portion sealed in a state of being joined to the lid.

An electrical storage device according to a ninth aspect of the present invention may be the electrical storage device according to the eighth aspect, in which the lid includes a first surface facing the electrode assembly, and a second surface on a side opposite to the first surface, and the second seal portion includes a portion where the outer packaging and the second surface are joined.

An electrical storage device according to a tenth aspect of the present invention may be the electrical storage device according to the eighth or ninth aspect, in which the lid includes a first portion and a second portion, the electrode terminal is held between the first portion and the second portion, and a ratio of a width of the electrode terminal to a width of the lid is 50% or more.

An electrical storage device according to an eleventh aspect of the present invention may be the electrical storage device according to any one of the first to tenth aspects, in which the outer packaging includes a barrier film suppressing permeation of an electrolytic solution, and the barrier film is disposed at least between an inner surface of the exterior member and the electrode assembly.

An electrical storage device according to a twelfth aspect of the present invention may be the electrical storage device according to any one of the first to eleventh aspects, in which the outer packaging includes a buffering film for enhancing a strength of the exterior member, and the buffering film is disposed on at least a corner of the outer packaging of the inner surface of the exterior member.

An electrical storage device according to a thirteenth aspect of the present invention may be the electrical storage device according to any one of the first to third aspects, further including a lid, in which the outer packaging further includes a second seal portion sealed in a state of being joined to the lid, the lid includes a metal portion that is a portion where a metal layer is exposed to a surface or a portion formed of a metal material, and the metal portion and the electrode assembly are welded to each other.

An electrical storage device according to a fourteenth aspect of the present invention may be the electrical storage device according to any one of the first to third aspects, further including an electrode terminal electrically connected to the electrode assembly, in which the outer packaging further includes a bulging portion protruding outward, and a second seal portion sealed by the bulging portion with the electrode terminal held therein.

An electrical storage device according to a fifteenth aspect of the present invention may be the electrical storage device according to any one of the first to eleventh aspects, in which the direction along the boundary between the first surface and the second surface is a direction perpendicular to a machine direction of the exterior member.

In this electrical storage device, the direction along the boundary is a direction perpendicular to the machine direction of the exterior member when the first seal portion is bent along the boundary. Therefore, in this electrical storage device, it is possible to reduce a possibility that the first seal portion is broken by bending of the first seal portion because the exterior member is unlikely to break even if a fold line is formed in a direction perpendicular to the machine direction of the exterior member.

An electrical storage device according to a sixteenth aspect of the present invention may be the electrical storage device according to any one of the first to twelfth aspects, in which the first seal portion has a concave portion that is a trace of being pressed by a seal bar, and the concave portion is formed at a distance from a root of the first seal portion.

An electrical storage device according to a seventeenth aspect of the present invention includes an electrode assembly, an electrode terminal electrically connected to the electrode assembly, and an outer packaging that seals the electrode assembly. The outer packaging includes a film-shaped exterior member, and includes a long side and a short side in plan view. The electrode terminal is disposed so as to extend along the long side.

An electrical storage device according to an eighteenth aspect of the present invention includes an electrode assembly and an outer packaging. The outer packaging seals the electrode assembly. In the outer packaging, the exterior member includes a film-shaped exterior member. The outer packaging includes a piece portion formed by joining the opposed surfaces of the exterior member wound around the electrode assembly. A root of the piece portion is formed at a boundary between surfaces in the outer packaging. In the piece portion, a space is formed in which the opposed surfaces are not joined. In the piece portion, a region where the opposed surfaces are joined and a region where the opposed surfaces are not joined are arranged in the vicinity of the boundary between surfaces.

Gas may be generated in the outer packaging. In this electrical storage device, a space is formed in the piece portion, and a region where the opposed surfaces are joined and a region where the opposed surfaces are not joined are arranged in the vicinity of the boundary between surfaces. Therefore, in this electrical storage device, gas in the outer packaging can be discharged through the piece portion by releasing the outer packaging from the sealed state in the piece portion. By sealing the outer packaging again, the electrical storage device cleared of gas can be manufactured.

A method for manufacturing an electrical storage device according to a nineteenth aspect of the present invention is a method for manufacturing an electrical storage device from an incomplete article. The incomplete article includes an electrode assembly and an outer packaging. The outer packaging seals the electrode assembly. The outer packaging includes a film-shaped exterior member. The outer packaging includes a piece portion formed by joining the peripheral edges of the opposed surfaces of the exterior member wound around the electrode assembly. A root of the piece portion is formed at a boundary between surfaces in the outer packaging. In the piece portion, a space is formed in which the opposed surfaces are not joined. In the piece portion, a region where the opposed surfaces are joined and a region where the opposed surfaces are not joined are arranged in the vicinity of the boundary between surfaces. The manufacturing method includes the steps of releasing the outer packaging from the sealed state in the piece to discharge gas to the outside of the outer packaging, and sealing the outer packaging again by joining the opposed surfaces in at least a part of the piece portion.

By this method for manufacturing an electrical storage device, an electrical storage device cleared of gas can be manufactured by discharging gas through the piece portion and sealing the outer packaging again.

A method for manufacturing an electrical storage device according to a twentieth aspect of the present invention is a method for manufacturing an electrical storage device including an electrode assembly, and an outer packaging that seals the electrode assembly. The outer packaging includes a film-shaped exterior member. The outer packaging includes a first seal part that is sealed by the joining of opposing faces of the exterior member wound around the electrode assembly. An area of the first surface is larger than an area of the second surface. The first seal portion does not overlap the first surface in plan view. The method for manufacturing an electrical storage device includes the step of forming the first seal portion by pressing a seal bar at a location at a distance from a root of a portion of the outer packaging where the first seal portion is to be formed.

A method for manufacturing an electrical storage device according to a twenty-first aspect of the present invention is a method for manufacturing an electrical storage device including an electrode assembly, and an outer packaging that seals the electrode assembly. The outer packaging includes a film-shaped exterior member. The outer packaging includes a first seal portion sealed by joining the opposed surfaces of the exterior member wound around the electrode assembly, and an area of the first surface is larger than an area of the second surface. The first seal part does not overlap the first face in plan view. The method for manufacturing an electrical storage device includes the step of forming the first seal portion by pressing a seal bar in such a manner that an edge of the seal bar is substantially coincident with a root of a portion of the outer packaging where the first seal portion is to be formed.

A method for manufacturing an electrical storage device according to a twenty-second aspect of the present invention is a method for manufacturing an electrical storage device including an electrode assembly, an electrode terminal electrically connected to the electrode assembly, and a lid having a hole into which the electrode terminal is inserted. The method for manufacturing an electrical storage device includes the steps of: electrically connecting an electrode assembly and an electrode terminal; manufacturing a lid; and inserting the electrode terminal connected to the electrode assembly into a hole of the lid.

A method for manufacturing an electrical storage device according to a twenty-third aspect of the present invention is a method for manufacturing an electrical storage device including an electrode assembly, an electrode terminal electrically connected to the electrode assembly, and a lid joined to the electrode terminal. The method for manufacturing an electrical storage device includes the steps of: electrically connecting an electrode assembly and an electrode terminal; and insert-molding a lid in the electrode terminal connected to the electrode assembly.

### ADVANTAGES OF THE INVENTION

According to the present invention, it is possible to provide an electrical storage device which enables suppression of unevenness of the distribution of pressure applied to a lower electrical storage device when a plurality of electrical storage devices are stacked, and a method for manufacturing the electrical storage device.

### BRIEF DESCRIPTION OF THE DRAWINGS

Fig. 1A is a perspective view schematically showing an electrical storage device according to Embodiment 1.
Fig. 1B is a sectional view showing an example of a layer configuration of the exterior member of Fig. 1A.
Fig. 2 is a plan view schematically showing the electrical storage device.
Fig. 3 is a side view schematically showing the electrical storage device.
Fig. 4 is a view showing, from the side, a state in which an exterior member is wound around an electrode assembly in the course of manufacturing the electrical storage device according to Embodiment 1.
Fig. 5 is a view showing, from below, a state in which an exterior member is wound around an electrode assembly in the course of manufacturing the electrical storage device according to Embodiment 1.
Fig. 6 is a sectional view taken along VI-VI in Fig. 2.
Fig. 7 is a diagram for illustrating a method for forming a second seal portion.
Fig. 8 is a flowchart showing a procedure for manufacturing the electrical storage device according to Embodiment 1.
Fig. 9 is a plan view schematically showing an electrical storage device according to Embodiment 2.
Fig. 10 is a side view schematically showing the electrical storage device.
Fig. 11 is a perspective view schematically showing a lid.
Fig. 12 is a view showing a first example in which a lid and an electrode terminal are integrally formed.
Fig. 13 is a view showing a second example in which a lid and an electrode terminal are integrally formed.
Fig. 14 is a flowchart showing a procedure for manufacturing the electrical storage device according to Embodiment 2.
Fig. 15 is a flowchart showing another procedure for manufacturing the electrical storage device according to Embodiment 2.
Fig. 16 is a view showing, from the side, a state in which an exterior member is wound around an electrode assembly in Embodiment 3.
Fig. 17 is a view showing, from below, a state in which an exterior member is wound around an electrode assembly and a lid is attached to the exterior member in Embodiment 3.
Fig. 18 is a flowchart showing a procedure for manufacturing the electrical storage device according to Embodiment 3.
Fig. 19 is a plan view schematically showing an electrical storage device according to Embodiment 4.
Fig. 20 is a side view schematically showing an electrical storage device according to Embodiment 4.
Fig. 21 is a view showing a state in which an exterior member is wound around an electrode assembly in the modification.
Fig. 22 is a perspective view schematically showing an electrical storage device in the modification.
Fig. 23 is a perspective view schematically showing a lid in the modification, and an electrode terminal attached to the lid.
Fig. 24 is a diagram showing an insertion step of a method for manufacturing an electrical storage device in a modification.
Fig. 25 is a perspective view schematically showing a lid in the modification, and an electrode terminal attached to the lid.
Fig. 26 is a perspective view schematically showing an electrical storage device in which the lid of Fig. 23 is attached.
Fig. 27 is a front view schematically showing a lid in another modification.
Fig. 28 is a front view schematically showing a lid in still another modification.
Fig. 29 is a plan view schematically showing an electrical storage device in still another modification.
Fig. 30 is a view showing, from the side, a state in which an exterior member is wound around an electrode assembly in the course of manufacturing an electrical storage device of another modification.
Fig. 31 is an enlarged view of a portion X in Fig. 30.
Fig. 32 is a sectional view of an electrical storage device of a modification.
Fig. 33 is a sectional view of an electrical storage device of a modification.

### EMBODIMENTS OF THE INVENTION

Hereinafter, embodiments of the present invention will be described in detail with reference to the drawings. The same or equivalent parts in the drawings are given the same symbols, and are not duplicately described. In the present embodiment, a numerical range indicated by the term "A to B" means "A or more" and "B or less". For example, the expression of "2 to 15 mm" means 2 mm or more and 15 mm or less. The upper limit or lower limit of a numerical value range, among numerical value ranges serially described in the present embodiment, may be replaced with the upper limit or lower limit of another of the serially described numerical value ranges. Upper limits, an upper limit and a lower limit, or lower limits which are described in isolation may be combined to form a numerical value range.

### [1. Embodiment 1]

### < 1-1. Configuration of electrical storage device>

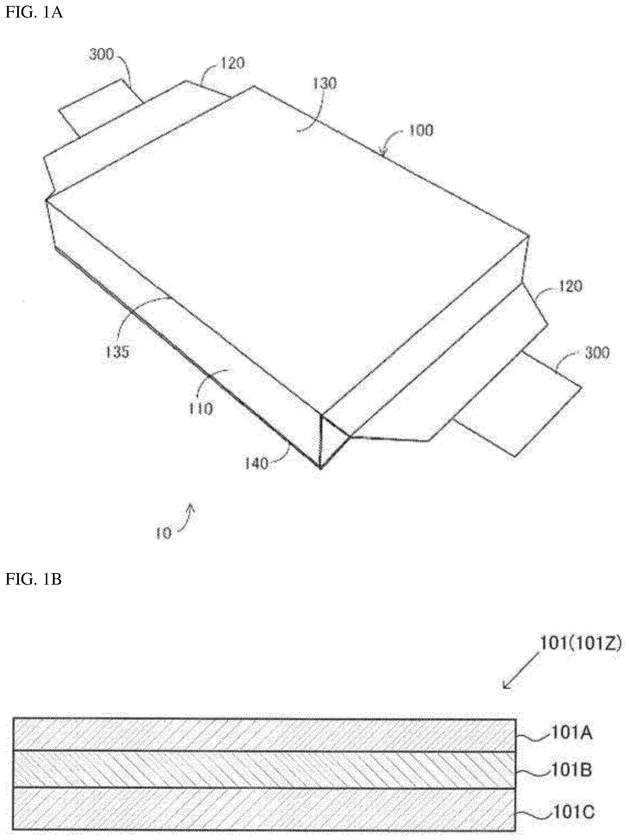

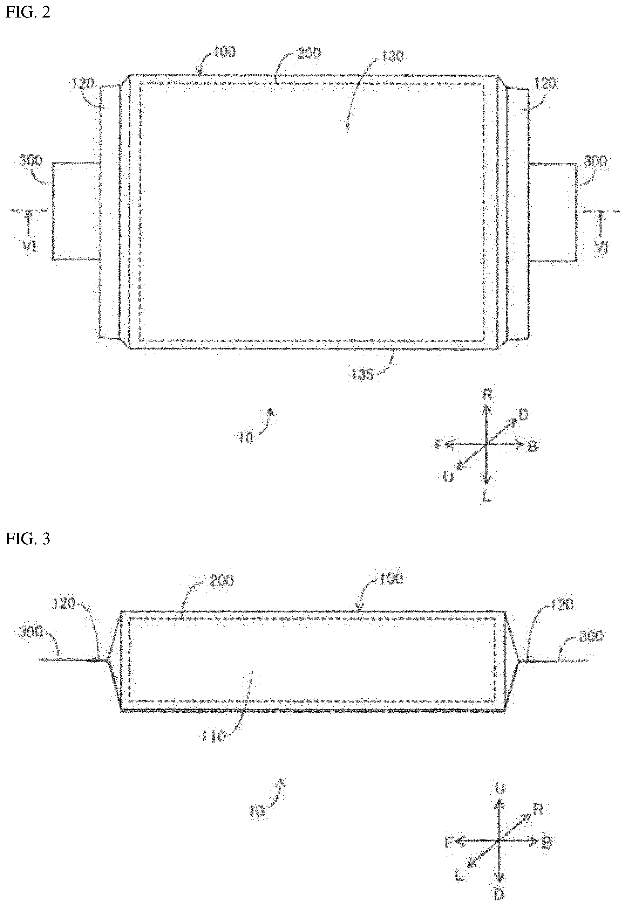

Fig. 1A is a perspective view schematically showing an electrical storage device 10 according to Embodiment 1. Fig. 2 is a plan view schematically showing the electrical storage device 10. Fig. 3 is a side view schematically showing the electrical storage device 10. In Figs. 2 and 3, the direction of arrow UD indicates a thickness direction of the electrical storage device 10, and the direction of arrow LR indicates a width direction of the electrical storage device 10. The direction of arrow FB indicates a depth direction of the electrical storage device 10. The direction indicated by each of arrows UD, LR and FB is also shared across the subsequent drawings.

Referring to Figs. 1A, 1B, 2 and 3, the electrical storage device 10 includes an electrode assembly 200, an outer packaging 100, and a plurality of electrode terminals (two electrode terminals) 300. The electrode assembly 200 includes electrodes (a positive electrode and a negative electrode), a separator and the like which constitute an electrical storage member such as a lithium ion battery, a capacitor or an all-solid-state battery. The electrode assembly 200 has a substantially rectangular parallelepiped shape. The term "substantially rectangular parallelepiped" means not only a perfect rectangular parallelepiped, but also a three-dimensional shape which can be regarded as a rectangular parallelepiped if the shape of a part of an outer surface is modified.

The electrode terminal 300 is a metal terminal used for input/output of electric power in the electrode assembly 200. One end part of the electrode terminal 300 is electrically connected to an electrode (positive electrode or negative electrode) in the electrode assembly 200, and the other end part protrudes outward from an end edge of the outer packaging 100.

The metal material forming the electrode terminal 300 is, for example, aluminum, nickel or copper. For example, when the electrode assembly 200 is a lithium ion battery, the electrode terminal 300 connected to the positive electrode is typically formed of aluminum or the like, and the electrode terminal 300 connected to the negative electrode is typically formed of copper, nickel or the like.

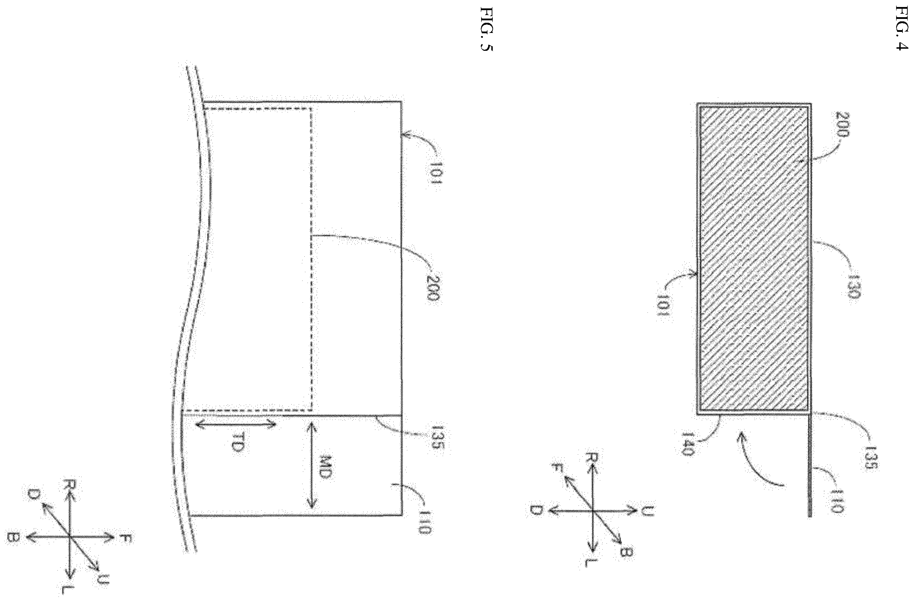

The outer packaging 100 includes a film-shaped exterior member 101 (Fig. 4 etc.), and seals the electrode assembly 200. In the electrical storage device 10, the outer packaging 100 is formed by winding the exterior member 101 around the electrode assembly 200 to seal an opening portion.

For example, there is a method in which a housing portion (recess) for housing the electrode assembly 200 is formed in the exterior member 101 through cold molding. However, it is not always easy to form a deep housing portion by such a method. When a deep housing portion (recess) (for example, a depth of 15 mm) is formed by cold molding, there is a high possibility that pinholes and cracks are generated in the exterior member, leading to deterioration of battery performance. On the other hand, in the outer packaging 100, the electrode assembly 200 is sealed by winding the exterior member 101 around the electrode assembly 200, so that the electrode assembly 200 can be easily sealed regardless of the thickness of the electrode assembly 200. For reducing a dead space between the electrode assembly 200 and the exterior member 101 in order to improve the volume energy density of the electrical storage device 10, it is preferable that the exterior member 101 is wound around the outer surface of the electrode assembly 200 with the former being in contact with the latter. In an all-solid-state battery, it is necessary to eliminate a space between the electrode assembly 200 and the exterior member 101 from the viewpoint that even application of high pressure from the outer surface of the battery is required for exhibiting battery performance, and therefore it is preferable that the exterior member 101 is wound around the outer surface of the electrode assembly 200 with the former being in contact with the latter.

Fig. 1B is a sectional view showing an example of a layer configuration of the exterior member 101. The exterior member 101 is, for example, a laminate (laminate film) 101Z including a base material layer 101A, a barrier layer 101B and a heat-sealable resin layer 101C in the stated order. The exterior member 101 is not required to include all of these layers, and may be free of the barrier layer 101B, for example. That is, the exterior member 101 is only required to be formed of a material flexible and easy to bend, and may be formed of, for example, a resin film. The exterior member 101 is preferably heat-sealable.

The base material layer 101A in the exterior member 101 is a layer for imparting heat resistance to the exterior member 101 and suppressing generation of pinholes which may occur during processing or distribution. The base material layer 101A includes, for example, at least one of an oriented polyester resin layer and an oriented polyamide resin layer. For example, when the base material layer 101A includes at least one of an oriented polyester resin layer and an oriented polyamide resin layer, breakage of the exterior member 101 can be suppressed by protecting the exterior barrier layer 101B during processing of the exterior member 101. From the viewpoint of increasing the tensile elongation of the exterior member 101, the oriented polyester resin layer is preferably a biaxially oriented polyester resin layer, and the oriented polyamide resin layer is preferably a biaxially oriented polyamide resin layer. Further, from the viewpoint of excellent piercing strength or shock strength, the oriented polyester resin layer is more preferably a biaxially oriented polyethylene terephthalate (PET) film, and the oriented polyamide resin layer is more preferably a biaxially oriented nylon (ONy) film. The base material layer 101A may include both an oriented polyester resin layer and an oriented polyamide resin layer. From the viewpoint of film strength, the thickness of the base material layer 101A is, for example, preferably 5 to 300 µm, more preferably 20 to 150 µm.

The barrier layer 101B in the exterior member 101 is formed of, for example, a metal foil from the viewpoint of processability such as moisture resistance and extensibility, and cost. Specifically, aluminum, a steel sheet, stainless steel, or the like may be used as the metal foil. It is preferable that the metal foil contains iron from the viewpoint of packaging suitability and pinhole resistance in packaging of the electrode assembly 200. The content of iron in the metal foil is preferably 0.5 to 5.0 mass%, more preferably 0.7 to 2.0 mass%. When the content of iron is 0.5 mass% or more, the exterior member 101 has packaging suitability, excellent pinhole resistance, and extensibility. When the content of iron is 5.0 mass% or less, the exterior member 101 has excellent flexibility.

From the viewpoint of the barrier property, pinhole resistance and packaging suitability, the thickness of the barrier layer 101B is preferably 15 to 100 µm, more preferably 30 to 80 µm. When the thickness of the barrier layer 101B is 15 µm or more, the exterior member 101 is unlikely to be broken even if stress is applied by packaging processing. When the thickness of the barrier layer 101B is 100 µm or less, an increase in mass of the exterior member 101 can be reduced, so that it is possible to suppress a decrease in weight energy density of the electrical storage device 10.

When the barrier layer 101B is a metal foil, it is preferable that a corrosion-resistant film is provided on at least a surface on a side opposite to the base material layer 101A for preventing dissolution and corrosion. The barrier layer 101B may include a corrosion-resistant film on each of both surfaces. Here, the corrosion-resistant film refers to a thin film obtained by subjecting the surface of the barrier layer 101B to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (e.g. acid resistance and alkali resistance) to the barrier layer 101B. Specifically, the corrosion-resistant film means a film which improves the acid resistance of the barrier layer 101B (acid-resistant film), a film which improves the alkali resistance of the barrier layer 101B (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 101B is provided with the corrosion-resistant film, the barrier layer 101B is regarded as including the corrosion-resistant film.

The corrosion-resistant film exhibits the effects of preventing delamination between the barrier layer 101B (e.g. an aluminum alloy foil) and the base material layer 101A during molding of the exterior member 101; and preventing dissolution and corrosion of the surface of the barrier layer 101B, particularly dissolution and corrosion of aluminum oxide present on the surface of the barrier layer 101B when the barrier layer 101B is an aluminum alloy foil, by hydrogen fluoride generated by reaction of an electrolyte with moisture. The corrosion-resistant film further exhibits the effects of improving the bondability (wettability) of the surface of the exterior barrier layer 101B to prevent delamination between the base material layer 101A and the barrier layer 101B during heat-sealing and delamination between the base material layer 101A and the barrier layer 101B during molding of the exterior member 101.

The heat-sealable resin layer 101C in the exterior member 101 is a layer that imparts a sealing property in heat-sealing to the exterior member 101. Examples of the heat-sealable resin layer 101C include resin films made from a polyolefin-based resin, or an acid-modified polyolefin-based resin obtained by graft-modification of a polyolefin-based resin with an acid such as maleic anhydride. From the viewpoint of the sealing property and strength, the thickness of the heat-sealable resin layer 101C is, for example, preferably 20 to 300 µm, more preferably 40 to 150 µm.

If the heat-sealable resin layer 101C is excessively hard, there is a possibility that at the time of being formed into the outer packaging 100 by an apparatus, a roll original or the exterior member 101 slips at a point of contact with the apparatus, and cannot be suitably conveyed. If the exterior member 101 is scratched by the resulting friction, the heat-sealable resin layer 101C is damaged. Occurrence of damage to the heat-sealable resin layer 101C may reduce the thermal sealing strength, and therefore it is preferable that the heat-adhesive resin layer has a property of moderately slipping. Thus, when a material that does not slip or hardly slips is used as the material for forming the heat-sealable resin layer 101C, it is preferable to add a slipping agent from the viewpoint of the conveyance property.

Further, from the viewpoint of the antifouling property and processability, the tensile elastic modulus of the heat-sealable resin layer 101C is preferably within the range of 500 MPa or more and 1,000 MPa or less as measured in accordance with the provisions of JIS K7161: 2014. The tensile elastic modulus of the heat-sealable resin layer 101C is in the range of more preferably 500 MPa or more and 800 MPa or less, still more preferably 500 MPa or more and 750 MPa or less, still more preferably 500 MPa or more and 700 MPa or less, still more preferably 510 MPa or more and 700 MPa or less.

When the tensile elastic modulus of the heat-sealable resin layer 101C is 500 MPa or more, contamination of the apparatus during molding and conveyance of the outer packaging 100 is effectively suppressed. That is, when the tensile elastic modulus of the heat-sealable resin layer 101C is 500 MPa or more, the slipping agent located on the surface of the heat-sealable resin layer 101C is hardly scraped by the apparatus or the like, and therefore the slipping agent located on the surface portion of the heat-sealable resin layer 101C is unlikely to be transferred to the apparatus or the like, so that contamination of the apparatus or the like is effectively suppressed. When the tensile elastic modulus of the heat-sealable resin layer 101C is 1,000 MPa or less, high sealing strength is exhibited by heat-sealing. That is, when the tensile elastic modulus of the heat-sealable resin layer 101C is 1,000 MPa or less, the heat-sealable resin layer 101C is unlikely to become brittle, so that high sealing strength is exhibited by heat-sealing. If the tensile elastic modulus of the heat-sealable resin layer 101C is more than 1,000 MPa, there is a possibility that the heat-sealable resin layer 101C is likely to become brittle, so that delamination easily occurs between the heat-sealable resin layer 101C and the barrier layer 101B laminated with the adhesive layer interposed therebetween, leading to a decrease in sealing strength, or stretching at a bent portion during molding of the outer packaging 100 causes whitening and cracking in a stretched portion, leading to deterioration of battery performance. If the tensile elastic modulus of the heat-sealable resin layer 101C is more than 1,000 MPa, extrudability is deteriorated, thus causing a decrease in productivity. Therefore, in the exterior member 101 of the electrical storage device 10 according to the present embodiment, the tensile elastic modulus of the heat-sealable resin layer 101C is set within the range of 500 to 1,000 MPa to suitably exhibit the effect of suppressing contamination of the apparatus or the like and the effect of improving the sealing strength in heat-sealing. The tensile elastic modulus of the heat-sealable resin layer 101C can be adjusted by adjusting the molecular weight, the melt mass flow rate (MFR) and the like of a resin for forming the heat-sealable resin layer 101C.

Where the operation of matching seal portions, the bending operation and the like for performing pillow-sealing during formation of the outer packaging 100 are called processing, problems similar to those described above occur during the processing. In particular, during processing, the exterior member 101 is easily scratched, and therefore it is important to solve the above-described problems. When the tensile elastic modulus of the heat-sealable resin layer 101C is in the range of 500 MPa or more and 1000 MPa or less, it is possible to perform good processing.

It is preferable that the exterior member 101 has one or more layers (hereinafter, referred to as a "buffer layer") having a buffer function outside the heat-sealable resin layer 101C (on the upper side in Fig. 1B), more preferably outside the barrier layer 101B. The buffer layer may be laminated on the outer side of the base material layer 101A, and the base material layer 101A may also have a function of the buffer layer. When the exterior member 101 has a plurality of buffer layers, the buffer layers may be adjacent to each other, or may be laminated with the base material layer 101A, the barrier layer 101B or the like interposed therebetween.

The material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material forming the nonwoven fabric is preferably a material having excellent heat resistance. When the buffer layer is formed of a nonwoven fabric, the lower limit of the thickness of the buffer layer is preferably 100 µm, more preferably 200 µm, still more preferably 1000 µm. When the buffer layer is formed of a nonwoven fabric, the upper limit of the thickness of the buffer layer is preferably 5,000 µm, more preferably 3,000 µm. A preferable range of the thickness of the buffer layer is 100 µm to 5,000 µm, 100 µm to 3,000 µm, 200 µm to 5,000 µm, 200 µm to 3,000 µm, 1,000 µm to 5,000 µm, or 1,000 µm to 3,000 µm. In particular, the thickness of the buffer layer is most preferably in the range of 1,000 µm to 3,000 µm.

When the buffer layer is formed of rubber, the lower limit of the thickness of the buffer layer is preferably 0.5 mm. When the buffer layer is formed of rubber, the upper limit of the thickness of the buffer layer is preferably 10 mm, more preferably 5 mm, still more preferably 2 mm. When the buffer layer is formed of rubber, the thickness of the buffer layer is preferably in the range of 0.5 mm to 10 mm, 0.5 mm to 5 mm, or 0.5 mm to 2 mm.

When the exterior member 101 has a buffer layer, the buffer layer functions as a cushion, so that the exterior member 101 is inhibited from being damaged by an impact in case where the electrical storage device 10 falls, or handling during manufacturing of the electrical storage device 10.

In the outer packaging 100 according to the present embodiment, a deep housing portion can be formed, and thus the weight of the electrode assembly 200 increases, so that attacks on the outer packaging 100 from shocks or the like intensify. Therefore, in the present embodiment, the piercing strength of the exterior member 101 pierced from the base material layer 101A side is preferably 30 N or more as measured by a method conforming to the provisions of JIS Z1707: 1997 when the thickness of the exterior member 101 is 195 µm or less, and the thickness of the barrier layer 101B is 20 to 85 µm inclusive. The piercing strength is preferably in the range of, for example, about 30 to 45 N, about 30 to 40 N, about 35 to 45 N, or about 35 to 40 N. The method of measuring the piercing strength of the exterior member 101 is as follows.

The piercing strength of the exterior member 101 from the base material layer 101A side is measured by a method conforming to JIS Z1707: 1997. Specifically, in a measurement environment at 23 ± 2°C and a relative humidity of 50 ± 5%, a test piece is fixed with a table having a diameter of 115 mm and having an opening with a diameter of 15 mm at the center, and a pressing plate, and pierced at a speed of 50 ± 5 mm per minute with a semicircular needle having a diameter of 1.0 mm and a tip shape radius of 0.5 mm, and the maximum stress before the needle completely passes through the test piece is measured. The number of test pieces is 5, and an average for the test pieces is determined. In the case where there is a shortage of test pieces so that five test pieces cannot be measured, test pieces available for the measurement are measured, and an average value for the test pieces is determined. As an apparatus for measuring the piercing strength, ZP-500N (force gauge) and MX2-500N (measurement stand) manufactured by IMADA Architects Ltd. can be used.

In the electrical storage device 10 according to the present invention, friction between the electrical storage devices 10, friction between the electrical storage device 10 and peripheral members and friction during conveyance of the electrical storage device 10 easily occur with an increase in weight of the electrode assembly 200. Thus, in the present embodiment, it is preferable that a surface of the exterior member 101 on the base material layer 101A side has a good ink fixing property (good printing characteristic), and the fixed ink hardly disappears. From such a viewpoint, the contact angle of a surface of the exterior member 101 according to the present embodiment on the base material layer 101A side is preferably 80 ° or less. That is, when the base material layer 101A forms an outermost surface in the exterior member 101, the contact angle of the surface of the base material layer 101A is 80 ° or less. When a coating layer is provided outside the base material layer 101A, the contact angle of the surface of the coating layer is 80 ° or less. In the present embodiment, the contact angle of a surface of the exterior member 101 on the base material layer 101A side is 80 ° or less, so that the ink is hardly repelled on the surface on the base material layer 101A side, an excellent printing characteristic is exhibited, and the fixed ink hardly disappears. In particular, if the exterior member 101 in which a slipping agent is provided on a surface on the base material layer 101A side to improve moldability is printed with ink by pad printing, the ink may be repelled at the surface on the base material layer 101A side, resulting in occurrence of printing failure. However, in the exterior member 101 of the electrical storage device 10 according to the present embodiment, the ink is hardly repelled even in such a case because the contact angle of the surface on the base material layer 101A side is 80 ° or less. Thus, the exterior member 101 according to the present embodiment is particularly suitable as the exterior member 101 in which printed characters and the like are formed on the surface of the base material layer 101A by pad printing.

In the present embodiment, the contact angle of the surface on the base material layer 101A side is more preferably 79 ° or less, still more preferably 72 ° or less from the viewpoint of improving printability and ensuring that the fixed ink hardly disappears. The contact angle of the surface on the base material layer 101A side can be determined by measuring the contact angle of an interface between the base material and a water droplet 5 seconds after dropping of the water using LSE-A210 manufactured by NiCK Corporation.

In the present embodiment, the contact angle of the surface on the base material layer 101A side can be suitably set to 80 ° or less by, for example, performing corona treatment on the surface on the base material layer 101A side. The corona treatment can be performed by applying corona discharge to the surface on the base material layer 101A side using a commercially available corona surface treatment apparatus. The contact angle of the surface on the base material layer 101A side can be set to 80 ° or less by treating the surface on the base material layer 101A side under corona treatment conditions of an application power of 1 kw or more and a speed of 10 MT/min.

When a surface of the exterior member 101 is printed with ink, a step of printing at least a part of the surface of base material layer 101A with ink is carried out after the corona treatment is performed. The printing method is not particularly limited, and when printing is performed on the exterior member 101 after molding, inkjet printing and pad printing are preferable. Even by pad printing in which ink is easily repelled at the base material layer 101A having a slipping agent on the surface thereof, the exterior member 101 of the electrical storage device 10 according to the present invention can be suitably printed with ink because the contact angle of the surface on the base material layer 101A side is set to 80 °. Therefore, for example, printed characters such as a bar code, a pattern and letters can be suitably formed on at least a part of the surface of the base material layer 101A.

Fig. 4 is a view showing, from the side, a state in which the exterior member 101 is wound around the electrode assembly 200 in the course of manufacturing the electrical storage device 10. As shown in Fig. 4, the exterior member 101 is wound around the periphery of the electrode assembly 200. In this case, the outermost layer of the electrode assembly 200 is not an electrode, and may be, for example, a protective tape or a separator. A first seal portion 110 is formed by heat-sealing the opposed surfaces (heat-sealable resin layers) of the exterior member 101 with the exterior member 101 wound around the periphery of the electrode assembly 200.

The root of the first seal portion 110 is preferably on a side 135 of the outer packaging 100. In the present embodiment, the side 135 is formed at a boundary between a first surface 130 and a second surface 140 having an area smaller than that of the first surface 130. That is, it can be said that in the present embodiment, the root of the first seal portion 110 is formed at a boundary between the first surface 130 and the second surface 140, and does not exist on either the first surface 130 or the second surface 140. The root of the first seal portion 110 may be present on a region other than the side 135. In the electrical storage device 10, the first seal portion 110 is bent to the second surface 140 side with respect to the side 135. In the electrical storage device 10, the first seal portion 110 is in contact with the second surface 140, and covers substantially the entire second surface 140. The term "substantially entire second surface 140" means a region accounting for 75% or more of the area of the second surface 140.

That is, in the electrical storage device 10, the first seal portion 110 is not formed on the first surface 130 having a large area. The first surface 130 is flatter as compared to a case where a seal portion such as the first seal portion 110 is in contact with the first surface 130. Therefore, even if another electrical storage device 10 is placed on the first surface 130, the other electrical storage device 10 does not tilt. As a result, the electrical storage device 10 enables suppression of unevenness of the distribution of pressure applied to the lower electrical storage device 10 when a plurality of electrical storage devices 10 are stacked. In other words, it can be said that when a module is formed by stacking a plurality of electrical storage devices 10, the first seal portion 110 is not disposed on a surface adjacent to the neighboring electrical storage device 10 (the first surface 130). In an all-solid-state battery, such a configuration is preferable from the viewpoint that even application of high pressure from the outer surface of the battery is required for exhibiting battery performance.

In the electrical storage device 10, the root of the first seal portion 110 is on a side 135 of the outer packaging 100. Therefore, in the electrical storage device 10, it is possible to secure a wider joining region in the first seal portion 110 as compared to a case where the root of the first seal portion 110 is present on the second surface 140 (for example, at the central part of the second surface 140 in the direction of arrow UD). The joining region of the first seal portion 110 is not necessarily the entire region of the first seal portion 110, and may be, for example, a part of the first seal portion 110, for example, only an area in the vicinity of the root of the first seal portion 110.

In the electrical storage device 10, substantially the entire second surface 140 is covered with the first seal portion 110. That is, in the electrical storage device 10, for example, the length of the first seal portion 110 in the direction of arrow UD is larger as compared to a case where the first seal portion 110 covers only 50% or less of the second surface 140 (see Fig. 3). Therefore, in the electrical storage device 10, it is possible to secure a wide joining region in the first seal portion 110. Since substantially the entire second surface 140 is covered with the first seal portion 110, the electrical storage device 10 stabilizes even if the electrical storage device 10 is disposed upright such that the second surface 140 is in contact with the placement surface. That is, the electrical storage device 10 hardly tilts with respect to the placement surface. Therefore, such a configuration is effective when, for example, a plurality of electrical storage devices 10 are arranged side by side to form a module.

Fig. 5 is a view showing, from below, a state in which the exterior member 101 is wound around the electrode assembly 200 in the course of manufacturing the electrical storage device 10. In the electrical storage device 10, the direction along the side 135 is a transverse direction (TD) of the exterior member 101 and the direction perpendicular to the side 135 is a machine direction (MD) of the exterior member 101 as shown in Fig. 5. That is, the direction along the side 135 is a direction (TD) perpendicular to the machine direction (MD) of the exterior member 101.

In the electrical storage device 10, the first seal portion 110 is bent along the side 135, and the direction along the side 135 is a direction perpendicular to the machine direction of the exterior member 101. Therefore, in this electrical storage device 10, it is possible to reduce a possibility that the first seal portion 110 is broken by bending of the first seal portion 110 because the exterior member 101 is unlikely to break even if a fold line is formed in a direction perpendicular to the machine direction of the exterior member 101.

The machine direction (MD) of the exterior member 101 corresponds to a rolling direction (RD) of a metal foil (aluminum alloy foil or the like) of the barrier layer in the exterior member 101. TD of the exterior member 101 corresponds to TD of the metal foil. The rolling direction (RD) of the metal foil can be identified by rolling streaks.

A plurality of cross-sections of the heat-sealable resin layer of the exterior member 101 are observed with an electron microscope to examine a sea-island structure, and a direction parallel to a cross-section having the largest average of diameters of islands in a direction perpendicular to the thickness direction of the heat-sealable resin layer (hereinafter, also referred to as a "length direction of the heat-sealable resin layer") can be determined as MD. This method can be used to identify MD of the exterior member 101 if the MD cannot be identified by the rolling streaks of the metal foil.

Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, for the each island on each cross-section, the linear distance between both ends perpendicular to the thickness direction of the heat-sealable resin layer is measured to determine a diameter d of the island. Next, in each cross-section, the average of the top 20 island diameters d in descending order is calculated. The direction parallel to a cross-section having the largest average of the island diameters d is determined as MD.

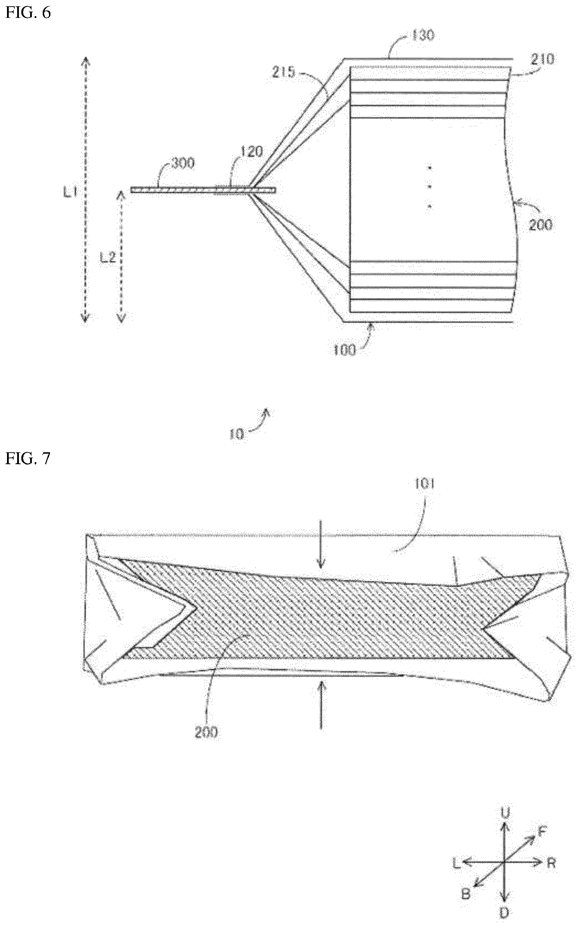

Fig. 6 is a sectional view taken along VI-VI in Fig. 2. As shown in Fig. 6, the second seal portion 120 is sealed with the outer packaging 100 holding the electrode terminal 300.

Fig. 7 is a diagram for illustrating a method for forming the second seal portion 120. As shown in Fig. 7, the exterior member 101 is folded, and the opposed surfaces (heat-sealable resin layers) of the exterior member 101 are heat-sealed to form the second seal portion 120. Although not shown in Fig. 7, the electrode terminal 300 is located between the opposed surfaces of the exterior member 101. An adhesion film that is bonded to both metal and resin may be disposed between the electrode terminal 300 and the exterior member 101.

The adhesion film may be configured to have one or more layers each formed of a resin film made from a polyolefin-based resin, or an acid-modified polyolefin-based resin obtained by graft-modification of a polyolefin-based resin with an acid such as maleic anhydride. When the adhesion film has two or more layers, it is preferable that a resin film made from a polyolefin-based resin is disposed on a layer joined to the exterior member 101. When the adhesion film has two or more layers, it is preferable that a resin film made from an acid-modified polyolefin-based resin obtained by graft-modifying a polyolefin-based resin with an acid such as maleic anhydride is disposed on a layer joined to the electrode terminal 300.

Referring to Fig. 6 again, the electrode assembly 200 includes a plurality of electrodes 210 (positive and negative electrodes). A current collector 215 extending from each electrode 210 is connected to the electrode terminal 300. In the electrical storage device 10, a part of the electrode terminal 300, which is outside the outer packaging 100 is located to extend over substantially half the thickness of the electrical storage device 10 in the thickness direction of the electrical storage device 10. That is, the length L2 is substantially half the length L1. The term "substantially half the thickness of the electrical storage device 10" means 35% to 65% of the thickness of the electrical storage device 10.

Therefore, in the electrical storage device 10, for example, it is possible to reduce a difference between the longest and the shortest of distances between a plurality of electrodes 210 and the electrode terminal 300 as compared to a case where the electrode terminal 300 is substantially identical in location to the first surface 130 in the thickness direction of the electrical storage device 10.

### < 1-2. Method for manufacturing electrical storage device>

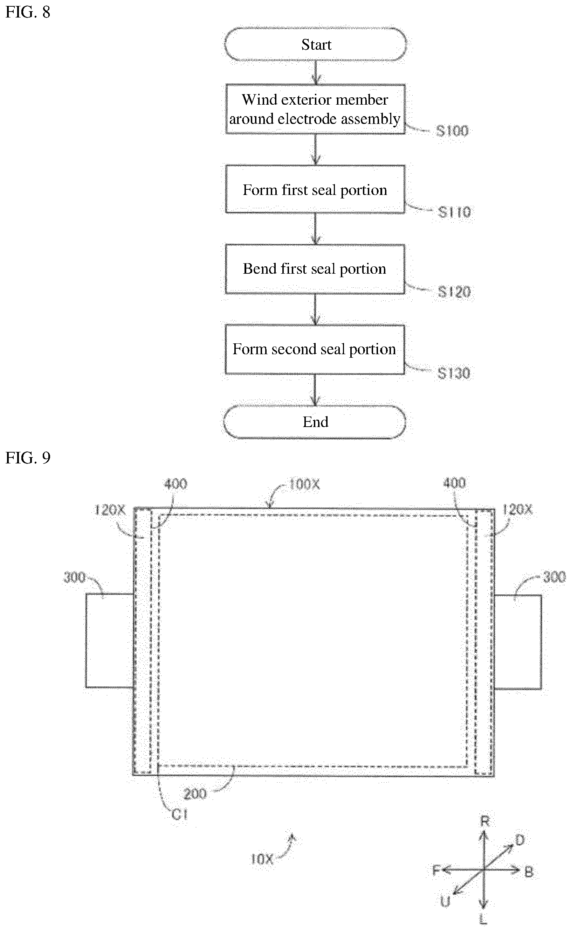

Fig. 8 is a flowchart showing a procedure for manufacturing the electrical storage device 10. The step shown in Fig. 8 is carried out by, for example, an apparatus for manufacturing the electrical storage device 10.

The manufacturing apparatus winds the exterior member 101 around the electrode assembly 200 (step S100). The manufacturing apparatus forms the first seal portion 110 by heat-sealing the opposed surfaces (heat-sealable resin layers) of the exterior member 101 (step S110). In this way, an incomplete article shown in Figs. 4 and 5 is produced.

The manufacturing apparatus bends the first seal portion 110 such that the first seal portion 110 comes into contact with the second surface 140 (step S120). The manufacturing apparatus folds the exterior member 101 in with the electrode assembly 200 housed therein, and heat-seals the opposed surfaces of (heat-sealable resin layers) of the exterior member 101 to form the second seal portion 120 (step S130). In this way, the electrical storage device 10 is completed.

### <1-3. Characteristics>

As described above, in the electrical storage device 10 according to Embodiment 1, the first seal portion 110 is bent toward the second surface 140 with a small area. That is, the first seal portion 110 does not exist on the first surface 130 with a large area. Therefore, even if another electrical storage device 10 is placed on the first surface 130, the other electrical storage device 10 does not tilt. As a result, the electrical storage device 10 enables suppression of unevenness of the distribution of pressure applied to the lower electrical storage device 10 when a plurality of electrical storage devices 10 are stacked. In the case of use for an all-solid-state battery, the packaging form according to the present invention is preferable because even application of high pressure from the outer surface of the battery is required for exhibiting battery performance. In the electrical storage device 10, the root of the first seal portion 110 is on a side 135 of the outer packaging 100. Therefore, in the electrical storage device 10, it is possible to secure a larger joining width in the first seal portion 110 in placement of the first seal portion 110 on the second surface 140 as compared to a case where the root of the first seal portion 110 is present on the second surface 140.

### [2. Embodiment 2]

In the electrical storage device 10 according to Embodiment 1, the second seal portion 120 is formed by folding the exterior member 101 and heat-sealing the opposed surfaces of the exterior member 101. However, the shape of the second seal portion 120 and the method for forming the second seal portion 120 are not limited thereto. Hereinafter, differences from Embodiment 1 will be mainly described, and description of the same portions as in Embodiment 1 will be omitted.

### <2-1. Configuration of electrical storage device>

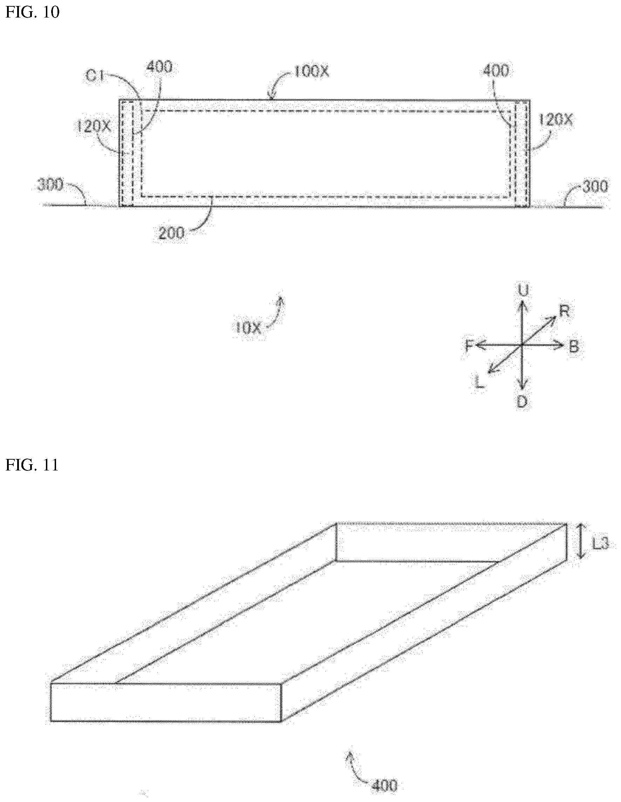

Fig. 9 is a plan view schematically showing an electrical storage device 10X according to Embodiment 2. Fig. 10 is a side view schematically showing the electrical storage device 10X. Fig. 11 is a perspective view schematically showing a lid 400.

Referring to Figs. 9, 10 and 11, an outer packaging 100X is formed by fitting the lid 400 into each of openings at both ends of an exterior member 101 wound around an electrode assembly 200. A second seal portion 120X is formed by heat-sealing the exterior member 101 and the lid 400 with the lid 400 fitted in the opening.

The lid 400 is a bottomed tray-shaped member having a rectangular shape in plan view, and is formed by, for example, cold-molding the exterior member 101. The lid 400 is not necessarily formed of the exterior member 101, and may be a metal molded article or a resin molded article. In the electrical storage device 10X, the lid 400 is disposed such that the bottom surface side of the lid 400 is located inside the outer packaging 100X. In the electrical storage device 10X, the bottom surface side of the lid 400 is not necessarily located inside the outer packaging 100X. In the electrical storage device 10X, the bottom surface side of the lid 400 may be located outside the outer packaging 100X. When the lid 400 is a metal molded article or a resin molded article, it is preferable that the material forming the lid 400 has a certain thickness so that the deformation of the outer packaging 100X is suppressed even if the electrical storage devices 10X are stacked. The minimum value of the thickness of the material forming the lid 400 is, for example, 1.0 mm, more preferably 3 mm, still more preferably 4 mm. The maximum value of the thickness of the material forming the lid 400 is, for example, 10 mm, more preferably 8.0 mm, still more preferably 7.0 mm.

The maximum value of the thickness of the material forming the lid 400 may be 10 mm or more. The thickness of the material forming the lid 400 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present disclosure, a film is not included as a material forming the lid 400 when the lid 400 is expressed as a metal molded article or a resin molded article. The film refers to a film defined by, for example, JIS (Japanese Industrial Standard), Standard Packaging Terminology. The film defined by JIS, Standard Packaging Terminology is film-shaped plastic having a thickness of less than 250 µm. The thickness of the material forming the lid 400 may vary depending on the portion of the lid 400. When the thickness of the material forming the lid 400 varies depending on the portion of the lid 400, the thickness of the material forming the lid 400 is the thickness of the thickest portion.

The electrode terminal 300 extends between the lid 400 and the exterior member 101 and protrudes to the outside of the outer packaging 100X while the electrode assembly 200 is housed. That is, the lid 400 and the exterior member 101 are heat-sealed with the electrode terminal 300 held therebetween. In the electrical storage device 10X, the location at which the electrode terminal 300 protrudes to the outside is not necessarily between the lid 400 and the exterior member 101. For example, the electrode terminal 300 may protrude to the outside from a hole formed in any of the six surfaces of the outer packaging 100X. In this case, a small gap between the outer packaging 100X and the electrode terminal 300 is filled with, for example, resin.

In the electrical storage device 10, the lid 400 and the electrode terminal 300 are provided as separate bodies. However, the lid 400 and the electrode terminal 300 are not necessarily provided as separate bodies. For example, the lid 400 and the electrode terminal 300 may be integrally formed.

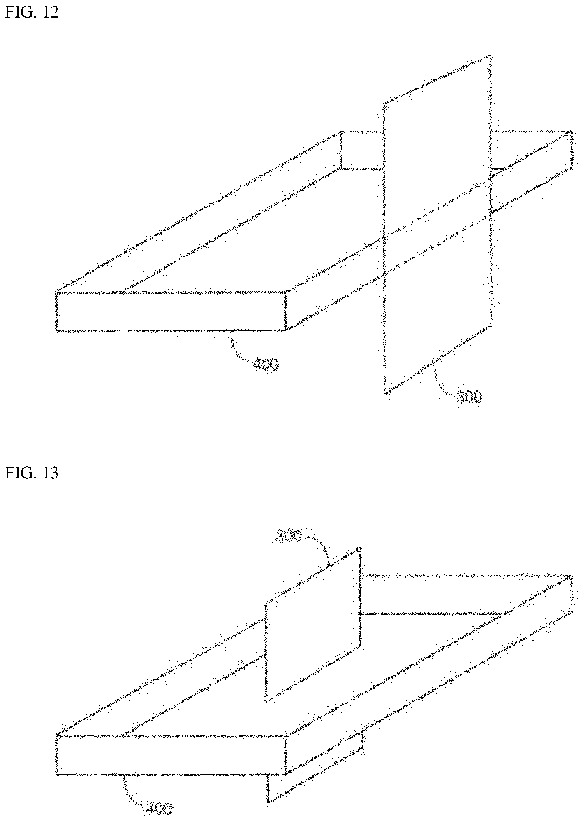

Fig. 12 is a view showing a first example in which the lid 400 and the electrode terminal 300 are integrally formed. In the first example, the electrode terminal 300 is heat-sealed to the side surface of the lid 400 in advance as shown in Fig. 12. For example, when the lid 400 is formed of the exterior member 101, an adhesion film that is bonded to both metal and resin as described in Embodiment 1 may be disposed between the lid 400 and the electrode terminal 300. When the adhesion film has two or more layers, it is preferable that a resin film made from a polyolefin-based resin is disposed on a layer joined to the lid 400. When the adhesion film has two or more layers, it is preferable that a resin film made from an acid-modified polyolefin-based resin obtained by graft-modifying a polyolefin-based resin with an acid such as maleic anhydride is disposed on a layer joined to the electrode terminal 300.

Fig. 13 is a view showing a second example in which the lid 400 and the electrode terminal 300 are integrally formed. In the second example, the electrode terminal 300 extends through a hole formed in the bottom surface portion of the lid 400 as shown in Fig. 13. A small gap in the bottom surface of the lid 400 is filled with, for example, resin.

In the electrical storage device 10X, a gas valve may be fitted in a hole formed in any of six surfaces of the second seal portion 120X or the outer packaging 100X. The gas valve includes a check valve or a breaking valve, and is configured to ensure that if the pressure of the inside of the outer packaging 100X increases due to generation of gas in the electrical storage device 10X, the pressure is decreased.

### <2-2. Method for manufacturing electrical storage device>

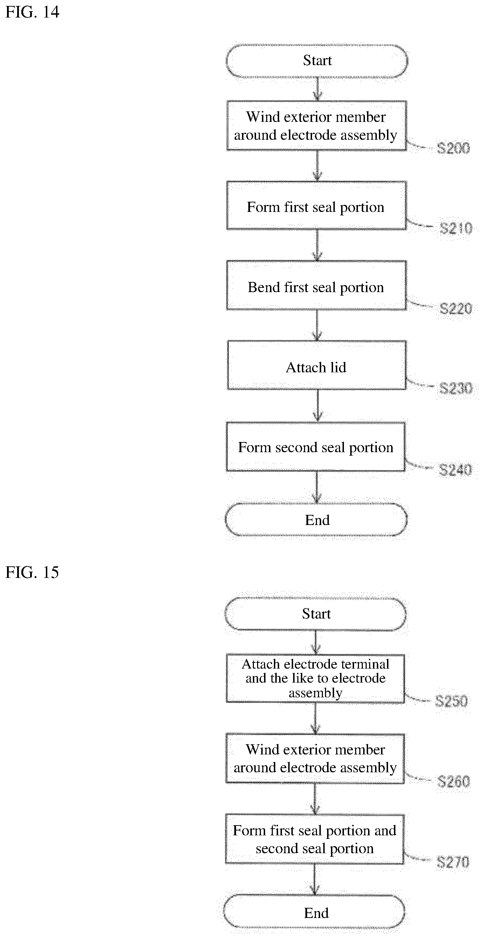

Fig. 14 is a flowchart showing a procedure for manufacturing the electrical storage device 10X. The step shown in Fig. 14 is carried out by, for example, an apparatus for manufacturing the electrical storage device 10X.

The manufacturing apparatus winds the exterior member 101 around the electrode assembly 200 (step S200). The manufacturing apparatus forms the first seal portion 110 by heat-sealing the opposed surfaces (heat-sealable resin layers) of the exterior member 101 (step S210). In this way, an incomplete article shown in Figs. 4 and 5 is produced.

The manufacturing apparatus bends the first seal portion 110 such that the first seal portion 110 comes into contact with the second surface 140 (step S220). The manufacturing apparatus houses the electrode assembly 200 in the incomplete article produced in step S220, and attaches the lid 400 to each of the openings at both ends (step S230). The manufacturing apparatus forms the second seal portion 120X by heat-sealing the exterior member 101 and the lid 400 (step S240). In this way, the electrical storage device 10X is completed.

### <2-3. Characteristics>

In the electrical storage device 10X according to Embodiment 2, the first seal portion 110 is bent toward the second surface 140 with a small area. Therefore, the electrical storage device 10X enables suppression of unevenness of the distribution of pressure applied to the lower electrical storage device 10X when a plurality of electrical storage devices 10X are stacked.

### <2-4. Other characteristics>

In the electrical storage device 10X according to Embodiment 2, the first seal portion 110 is not necessarily bent toward the second surface 140 with a small area. For example, the first seal portion 110 may be bent toward the first surface 130 with a large area. The root of the first seal portion 110 is not necessarily on the side 135 of the outer packaging 100X. The root of the first seal portion 110 may be located on a surface of the outer packaging 100X which excludes the lid 400. Even in this case, the electrical storage device 10X according to Embodiment 2 has, for example, the following characteristics.

The electrical storage device 10X includes an electrode assembly (electrode assembly 200), and an outer packaging (outer packaging 100X) which seals the electrode assembly (electrode assembly 200), and the outer packaging (outer packaging 100X) includes an exterior member (exterior member 101) which is wound around the electrode assembly (electrode assembly 200) and has openings formed at both end parts thereof, and a lid (lid 400) which seals the openings.

In the electrical storage device 10X, it is not the case that as in Embodiment 1, the second seal portion 120X is formed by heat-sealing the opposed surfaces of the exterior member 101 (see Fig. 7). In the electrical storage device 10X, the opening of the exterior member 101 wound around the electrode assembly 200 is sealed by the lid 400. That is, the second seal portion 120X is formed at a portion where the lid 400 and the exterior member 101 overlap (see Figs. 9 and 10). Such a configuration enables the region of the second seal portion 120X to be easily narrowed by adjusting a depth L3 of the lid 400 (Fig. 11).

In the electrical storage device 10X, an excessive load caused by a corner C1 piercing the exterior member 101 is not generated at a location where the corner C1 of the electrode assembly 200 is covered in the exterior member 101 (Figs. 9 and 10). In the electrical storage device 10X, it is not the case that as in Embodiment 1, the second seal portion 120X is formed by heat-sealing the opposed surfaces of the exterior member 101 as described above.

The procedure for manufacturing the electrical storage device 10X is not limited to the procedure shown in the flowchart of Fig. 14. For example, the electrical storage device 10X may be manufactured by the procedure shown in the flowchart of Fig. 15.

Fig. 15 is a flowchart showing another procedure for manufacturing the electrical storage device 10X according to Embodiment 2. The step shown in Fig. 15 is carried out by, for example, an apparatus for manufacturing the electrical storage device 10X. The manufacturing apparatus attaches to the electrode assembly 200 a member in which the electrode terminal 300 and the lid 400 are integrated (for example, a member shown in Figs. 12 and 13) (step S250). For example, the electrode terminal 300 is welded to the electrode assembly 200. Thereafter, the manufacturing apparatus winds the exterior member 101 around the electrode assembly 200 (step S260). The manufacturing apparatus forms the first seal portion 110 by heat-sealing the opposed surfaces (heat-sealable resin layers) of the exterior member 101, and forms the second seal portion 120X by heat-sealing the exterior member 101 and the lid 400 (step S270). In this way, the electrical storage device 10X is completed. The electrical storage device 10X may be manufactured by this procedure.

### [3. Embodiments 3]

It is common practice to pass through a step of aging a temporarily sealed electrical storage device in an environment at a predetermined time for a predetermined time (hereinafter, referred to as an aging step) for the purpose of, for example, allowing an electrolytic solution to permeate an electrode assembly in the battery manufacturing process. Gas is generated from the electrode assembly 200 in the aging step, and it is necessary to discharge the gas to the outside of the battery. The electrical storage device 10X according to Embodiment 2 is not provided with a mechanism for removing gas generated in the aging step at the final stage of manufacturing of the electrical storage device 10X. An electrical storage device 10Y according to Embodiment 3 is provided with a mechanism for removing gas generated from an electrode assembly 200 at the final stage of manufacturing of the electrical storage device 10Y. Hereinafter, differences from Embodiment 2 will be mainly described, and description of the same portions as in Embodiment 2 will be omitted.

### <3-1. Configuration of electrical storage device>

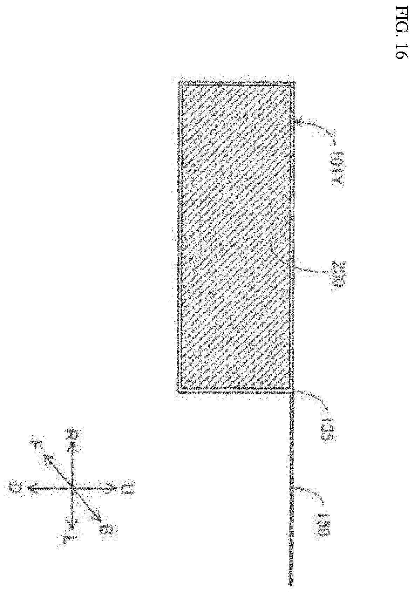

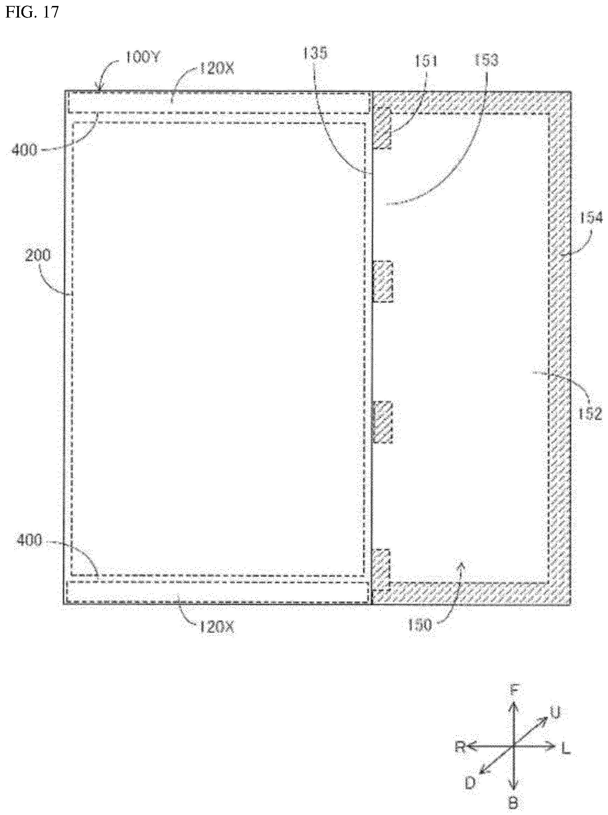

Fig. 16 is a view showing, from the side, a state in which an exterior member 101Y is wound around the electrode assembly 200 in the course of manufacturing the electrical storage device 10. Fig. 17 is a view showing, from below, a state in which the exterior member 101Y is wound around the electrode assembly 200 and a lid 400 is attached to the exterior member 101Y in the course of manufacturing the electrical storage device 10Y.

As shown in Figs. 16 and 17, a piece portion 150 is formed with the exterior member 101Y wound around the electrode assembly 200. The piece portion 150 is formed by joining the opposed surfaces of the exterior member 101Y wound around the electrode assembly 200. More specifically, the piece portion 150 is formed by joining (heat-sealing) the peripheral edges of the opposed surfaces of the exterior member 101Y wound around the electrode assembly 200. That is, in the piece portion 150, a first seal portion 154 is formed on the peripheral edge.

In the piece portion 150, a space 152 is formed in which the opposed surfaces of the exterior member 101Y are not joined. In the vicinity of a side 135, joined regions 151 where the opposed surfaces of the exterior member 101Y are joined and non-joined regions 153 where the opposed surfaces of the exterior member 101Y are not joined are alternately arranged. That is, in the piece portion 150, a pattern of joined regions 151 is formed along the side 135.

Gas generated from the electrode assembly 200 is discharged to the outside of the outer packaging 100Y by releasing the outer packaging 100Y from the sealed state by, for example, cutting a part of the piece portion 150. Here, the gas discharged to the outside of the outer packaging 100Y is not limited to gas generated from the electrode assembly 200, and may be gas other than the gas generated from the electrode assembly 200, such as air, water vapor or hydrogen sulfide.

Thereafter, a portion including regions near the side 135 is zonally heat-sealed to bring the outer packaging 100Y into a sealed state again. In this way, the electrical storage device 10Y is completed. In the completed electrical storage device 10Y, regions with a high joining force between the opposed surfaces of the exterior member 101Y and regions with a low joining force between the surfaces are alternately arranged along the side 135 in the vicinity of the side 135. In other words, in the heat-sealed portion near the side 135, thin portions and thick portions are alternately arranged along the side 135. This is because heat-sealing is performed in the vicinity of the side 135 again, resulting in single sealing in the non-joined region 153 and double sealing in the joined region 151.

### <3-2. Method for manufacturing electrical storage device>

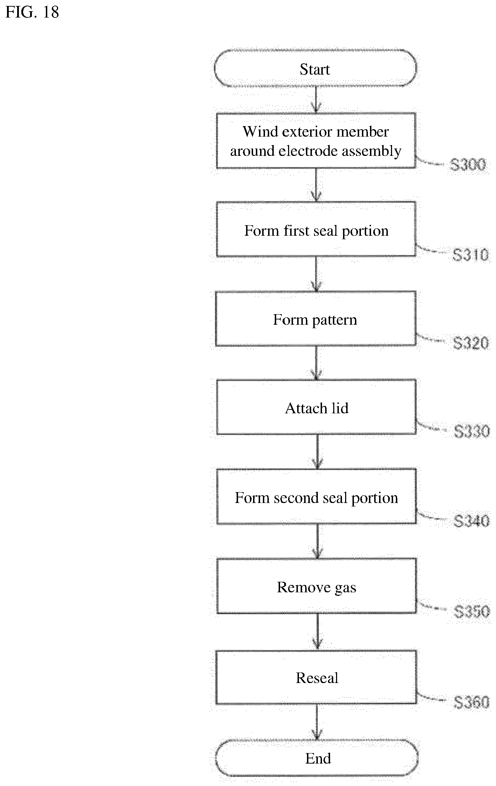

Fig. 18 is a flowchart showing a procedure for manufacturing the electrical storage device 10Y. The step shown in Fig. 18 is carried out by, for example, an apparatus for manufacturing the electrical storage device 10Y.

The manufacturing apparatus winds the exterior member 101Y around the electrode assembly 200 (step S300). The manufacturing apparatus forms the first seal portion 154 by heat-sealing the peripheral edges of the opposed surfaces (heat-sealable resin layers) of the exterior member 101Y (step S310). The manufacturing apparatus forms a pattern of joined regions 151 by heat-sealing the opposed surfaces of the exterior member 101Y in the vicinity of the side 135 (step S320).

The manufacturing apparatus attaches a lid 400 to each of the openings at both ends with the electrode assembly 200 housed in the incomplete article produced in step S320 (step S330). The manufacturing apparatus forms the second seal portion 120X by heat-sealing the exterior member 101Y and the lid 400 (step S340). Thereafter, an aging step is carried out.

By, for example, cutting the piece portion 150, the manufacturing apparatus removes the gas generated in the aging step (step S350). The manufacturing apparatus reseals the outer packaging 100Y by zonally heat-sealing a portion of the piece portion 150 which includes joined regions 151, and removing the end edge portion (step S360). Thereafter, the piece portion 150 is bent toward the second surface 140 to complete the electrical storage device 10Y.

### <3-3. Characteristics>

In the electrical storage device 10Y according to Embodiment 3, the piece portion 150 including the first seal portion 154 is bent toward the second surface 140 with a small area. Therefore, the electrical storage device 10Y enables suppression of unevenness of the distribution of pressure applied to the lower electrical storage device 10Y when a plurality of electrical storage devices 10Y are stacked. In the case of use for an all-solid-state battery, the packaging form according to the present invention is preferable because even application of high pressure from the outer surface of the battery is required for exhibiting battery performance.

### [4. Embodiments 4]

In the electrical storage device 10X according to Embodiment 2, the location at which the electrode terminal 300 protrudes to the outside is between the lid 400 and the exterior member 101. However, the location at which the electrode terminal 300 protrudes to the outside is not limited thereto. Hereinafter, differences from Embodiment 2 will be mainly described, and description of the same portions as in Embodiment 2 will be omitted.

### <4-1. Configuration of electrical storage device>

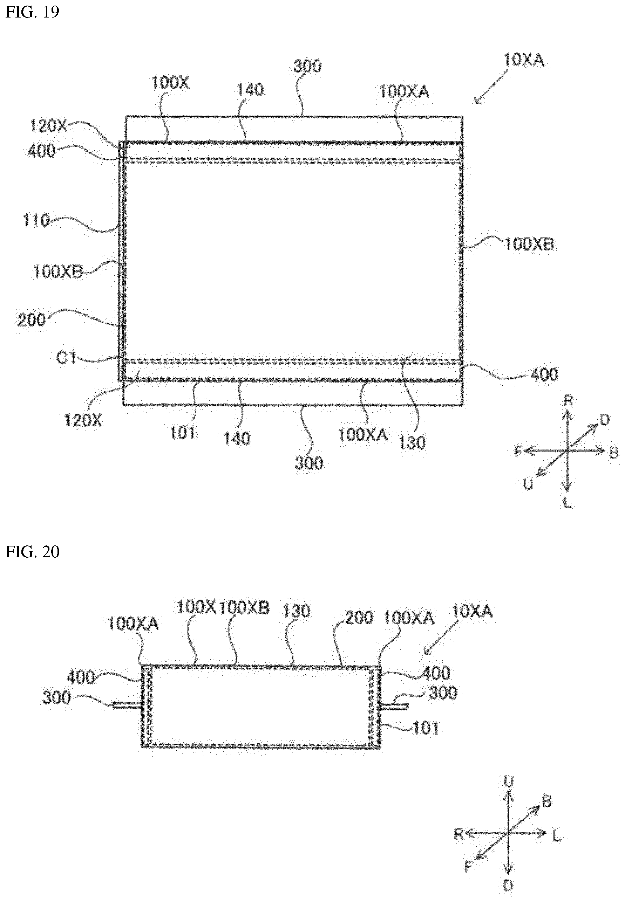

Fig. 19 is a plan view schematically showing an electrical storage device 10XA according to Embodiment 4. Fig. 20 is a side view schematically showing the electrical storage device 10XA. The outer packaging 100X of the electrical storage device 10XA includes a pair of long sides 100XA and a pair of short sides 100XB in plan view. An outer packaging 100X is formed by fitting the lid 400 into each of openings along the long side 100XA at both ends of an exterior member 101 wound around an electrode assembly 200. A second seal portion 120X is formed by heat-sealing the exterior member 101 and the lid 400 with the lid 400 fitted in the opening. A through-hole (not shown) is formed in the lid 400. The two electrode terminals 300 protrude from the through-hole of the lid 400 to the outside of the outer packaging 100X. The two electrode terminals 300 have a shape along the long side 100XA of the outer packaging 100X. A small gap between the through-hole and the electrode terminal 300 is filled with, for example, resin. In Embodiment 4, the first seal portion 110 is formed on one of a pair of short sides 100XB.

It is possible to arbitrarily select the location at which the electrode terminal 300 of the lid 400 protrudes in the thickness direction of the electrical storage device 10XA (direction of arrow UD). In Embodiment 4, the electrode terminals 300 protrude from substantially the center of the lid 400 to the outside of the outer packaging 100X in the thickness direction of the electrical storage device 10XA as shown in Fig. 20. The length of the electrode terminal 300 in the depth direction of the electrical storage device 10XA (direction of arrow FB) can be arbitrarily selected. In Embodiment 4, the length of the electrode terminal 300 in the depth direction of the electrical storage device 10XA (direction of arrow FB) is substantially equal to the length of the electrode assembly 200.

### <4-2. Characteristics>

In the electrical storage device 10XA according to Embodiment 4, the electrode terminal 300 is disposed along the long side 100XA with a large length in the depth direction, so that a larger electrode terminal 300 can be used. Therefore, it is possible to provide the high-power electrical storage device 10XA.

### [5. Modification]

The embodiments are examples of possible forms of the electrical storage device and the method for manufacturing an electrical storage device according to the present invention, and are not intended to limit the forms thereof. The electrical storage device and the method for manufacturing an electrical storage device according to the present invention may have a form different from that exemplified in each of the embodiments. An example thereof is a form in which a part of the configuration of each of the embodiments is replaced, changed or omitted, or a form in which a new configuration is added to each of the embodiments. Some examples of modifications of the embodiments will be described below. The embodiments can be combined as long as there is no technical inconsistency.

<5-1>
In Embodiments 1 to 4, one exterior member was wound around the electrode assembly 200. However, the number of exterior members wound around the electrode assembly 200 is not necessarily 1. For example, two or more exterior members may be wound around the electrode assembly 200.

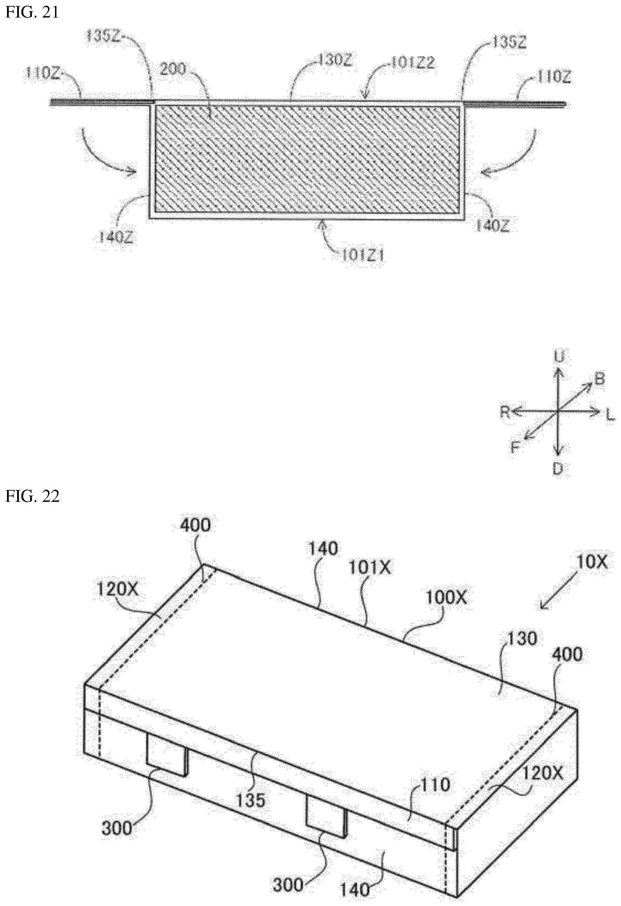

Fig. 21 is a view showing, from the side, a state in which exterior members 101Z1 and 101Z2 are wound around the electrode assembly 200 in the course of manufacturing the electrical storage device in the modification. As shown in Fig. 21, the periphery of the electrode assembly 200 is covered with the exterior members 101Z1 and 101Z2. A first seal portion 110Z is formed by joining opposed surfaces of the exterior members 101Z1 and 101Z2. In this example, each first seal portion 110Z is not bent to the first surface 130Z side, but bent to the second surface 140Z side. Even with this configuration, it is possible to exhibit an effect of suppressing unevenness of the distribution of pressure applied to a lower electrical storage device when a plurality of electrical storage device are stacked. In the case of use for an all-solid-state battery, the packaging form according to the present invention is preferable because even application of high pressure from the outer surface of the battery is required for exhibiting battery performance. In this example, each first seal portion 110Z is not necessarily bent. In this modification, each seal portion 110Z may be sealed with a part of the electrode terminal 300 held therein. In this modification, each first seal portion 110Z is not required to be formed on the side 135Z, and may protrude outward from substantially the center of the second surface 140Z in the thickness direction of the electrical storage device.

<5-2>
In Embodiments 1 to 4, the electrode assembly 200 is a so-called stack type formed by laminating a plurality of electrodes 210, but the form of the electrode assembly 200 is not limited thereto. For example, the electrode assembly 200 may be of so-called winding type configured such that a positive electrode and a negative electrode are wound with a separator interposed therebetween. The electrode assembly 200 may be formed by laminating a plurality of so-called winding-type electrode assemblies.

<5-3>
In Embodiments 1 to 4, the second surface 140 is a flat surface extending downward substantially at right angle from the first surface 130. However, the form of the second surface 140 is not limited thereto. For example, assume that the electrode assembly 200 is a winding-type electrode assembly, and a flat surface and a curved surface are formed on an outer periphery thereof is considered. Here, assume that the area of the flat surface is larger than the area of the curved surface, the first surface 130 covers the flat surface of the electrode assembly, and the second surface 140 covers the curved surface of the electrode assembly. In this case, the second surface 140 may be formed by a curved surface. In this case, a boundary portion where the second surface 140 extends downward from the first surface 130 is the side 135.

<5-4>
In Embodiment 3, the joined region 151 is formed at four locations. However, the number of locations at which the joined region 151 is formed is not limited thereto. For example, the joined region 151 may be formed at two locations near both ends along the side 135 or at only one location near the center of the side 135, or may be formed at five or more locations.

<5-5>
In Embodiment 2, the electrode terminal 300 is disposed in the second seal portion 120X, but the location at which the electrode terminal 300 is disposed in the outer packaging 100X is not limited thereto. For example, as shown in Fig. 22, the electrode terminal 300 can also be disposed in the first seal portion 110 in Embodiment 2. In other words, the first seal portion 110 is sealed with the electrode terminal 300 held therein. In this modification, at least one of the two electrode terminals 300 may be bent toward the second surface 140, or toward a side opposite to the second surface 140, or is not required to be bent so as to protrude outward from the side 135. In this modification, the electrode terminal 300 and the first seal portion 110 can be easily sealed, so that the sealing property of the outer packaging 100X is enhanced. In addition, the electrode assembly 200 can be easily housed in the outer packaging 100X. In this modification, for example, the lid 400 is fitted into each of the openings at both ends of the exterior member 101X as in the above-described Embodiment 2. A second seal portion 120 is formed by heat-sealing the exterior member 101X and the lid 400 with the lid 400 fitted in the opening. Even in Embodiment 1, the electrode terminal 300 may be disposed in the first seal portion 110.

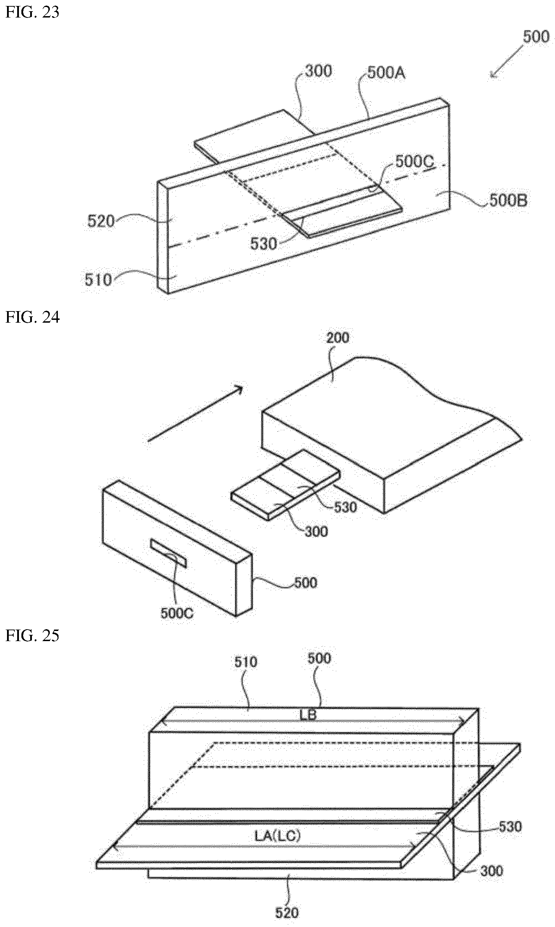

<5-6>
In Embodiment 2, the configuration of the lid 400 can be arbitrarily changed. Fig. 23 is a perspective view showing a lid 500 which is a modification of the lid 400. The lid 500 has, for example, a plate shape, and includes a first surface 500A facing the electrode assembly 200 (see Fig. 9) and a second surface 500B on a side opposite to the first surface 500A. A hole 500C extending through the first surface 500A and the second surface 500B is formed at the center of the lid 500. The material for forming the lid 500 is, for example, resin. In this modification, it is preferable that an adhesive film 530 which is bonded to both the electrode terminal 300 and the lid 500 is attached to a predetermined area including a portion of the electrode terminal 300 which is joined to the 500. The specifications of the adhesion film 530 are the same as the specifications of the adhesion film described in Embodiment 1. In the modification, the method for manufacturing the electrical storage device 10X may include the steps of: electrically connecting the electrode assembly 200 and the electrode terminal 300; manufacturing the lid 500; and inserting the electrode terminal 300 connected to the electrode assembly 200 into a hole 500C of the lid 500 (see Fig. 24, hereinafter referred to as an "insertion step").

When the lid 500 has a sheet shape, it is preferable that the lid 500 has a certain thickness so that the deformation of the outer packaging 100X is suppressed even if the electrical storage devices 10X are stacked. In a different viewpoint, when the lid 500 has a sheet shape, it is preferable that a lateral surface of the lid 500 has a certain thickness so that the lateral surface of the lid 500 and the exterior member 101X can be suitably heat-sealed in formation of the second seal portion 120X. The minimum value of the thickness of the lid 500 is, for example, 1.0 mm, more preferably 3 mm, still more preferably 4 mm. The maximum value of the thickness of the lid 500 is, for example, 10 mm, more preferably 8.0 mm, still more preferably 7.0 mm. The maximum value of the thickness of the lid 500 may be 10 mm or more. The thickness of the material forming the lid 500 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present disclosure, a film defined by JIS (Japanese Industrial Standard), Standard Packaging Terminology is not included as a material forming the lid 500 when the lid 500 is expressed as having a sheet shape. The thickness of the lid 500 may vary depending on the portion of the lid 500. When the thickness of the lid 500 varies depending on the portion, the thickness of the lid 500 is the thickness of the thickest portion.

The lid 500 may be formed of a member divided into a first portion 510 and a second portion 520, and may be manufactured by joining the first portion 510 and the second portion 520 with the electrode terminal 300 and the adhesive film 530 sandwiched therebetween. In these modifications, if a gap is generated between the adhesion film 530 and the hole 530C, it is preferable to fill the gap with, for example, a resin material such as hot-melt resin or by resin welding.

When the lid 500 is formed of a member divided into the first portion 510 and the second portion 520, the relationship between a width LA of the electrode terminal 300 and a width LB of the lid 500 can be arbitrarily selected. From the viewpoint of more solidly joining the electrode terminal 300 and the lid 500, the ratio of the width LA to the width LB, RA, is preferably 50% or more. In the example shown in Fig. 25, the width LA and the width LB are substantially equal, in other words, the ratio RA is 100%. When the ratio RA is 50% or more, the electrode terminal 300 and the lid 500 can be more solidly joined by heating the electrode terminal 300 because the area of a portion of the electrode terminal 300 which is joined to the lid 500 is large. In this modification, it is preferable that the width LC of the adhesion film 530 is substantially equal to the width LA of the electrode terminal 300.

The lid 500 may be manufactured by insert-molding the lid 500 with respect to the electrode terminal 300 to which the adhesion film 530 is attached. In this case, the method for manufacturing the electrical storage device 10X includes the steps of: electrically connecting the electrode assembly 200 and the electrode terminal 300; and insert-molding the lid 500 in the electrode terminal 300 connected to the electrode assembly 200 (hereinafter, referred to an insert-molding step). After the insert-molding step, the exterior member 101 is wound around the electrode assembly 200 and the lid 500. In the insert molding step, it is preferable that a heat insulation material for protecting the electrode assembly 200 is disposed between the electrode assembly 200 and a portion where the lid 500 is formed. It is preferable that the heat insulation material is removed after the insert-molding step.

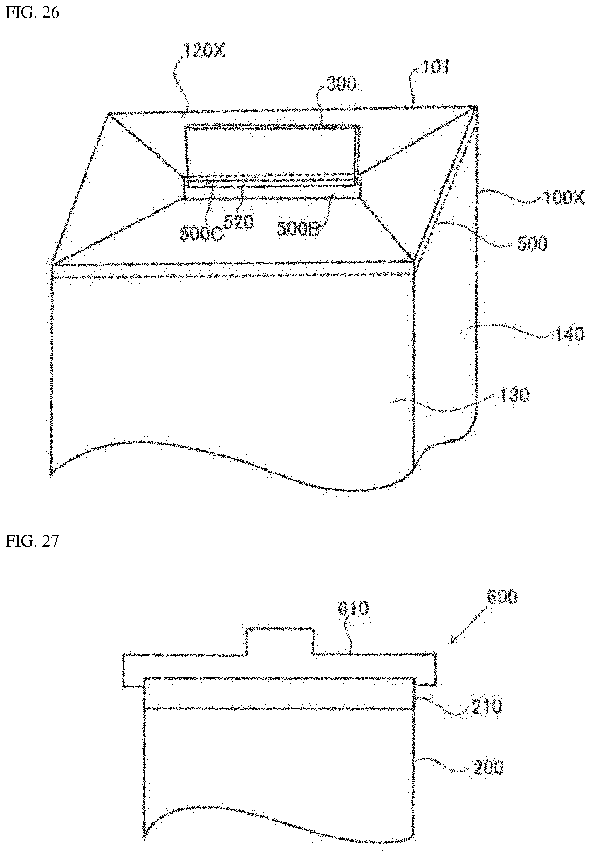

In these modifications, the second seal portion 120X may be formed by joining the exterior member 101 and the second surface 500B of the lid 500 with the lid 500 fitted in the outer packaging 100X as shown in Fig. 26. Means for joining the exterior member 101 and the second surface 500B of the lid 500 is, for example, heat sealing. In this modification, the exterior member 101 is joined to the lid 500 over a wider range, so that the sealing property of the outer packaging 100X is enhanced. The second seal portion 120X may be formed by bending the adhesion film 530 to form a lid, and joining an arbitrary portion of the adhesion film 530 to the exterior member 101X. In these modifications, it is preferable that a barrier layer is laminated to at least a part of a surface of the lid 500. Alternatively, when the lid 500 has a plurality of layers, a barrier layer may be formed on an arbitrary layer. The material for forming the barrier layer is, for example, aluminum, a steel sheet, or stainless steel.

Fig. 27 is a front view of a lid 600 which is another modification of the lid 400 in Embodiment 2. The lid 600 includes a metal portion 610 where a metal is exposed to a surface thereof, and the metal portion 610 and the electrode 210 of the electrode assembly 200 are welded to each other. The lid 600 may include only the metal portion 610 in its entirety, or the metal portion 610 may be partially formed in the lid 600. When the metal portion 610 is partially formed, the lid 600 is formed of a material of multilayer structure which includes a metal layer. When the lid 600 is formed of a material of multilayer structure with a metal layer as an intermediate layer, the metal portion 610 is a portion where layers other than the metal layer are partially removed so that the metal layer is exposed. In the example shown in Fig. 27, the metal portion 610 of the lid 600 functions as an electrode terminal, so that a space between the lid 600 and the electrode 210 becomes unnecessary. Therefore, it is possible to downsize the electrical storage device 10X (see Fig. 9).

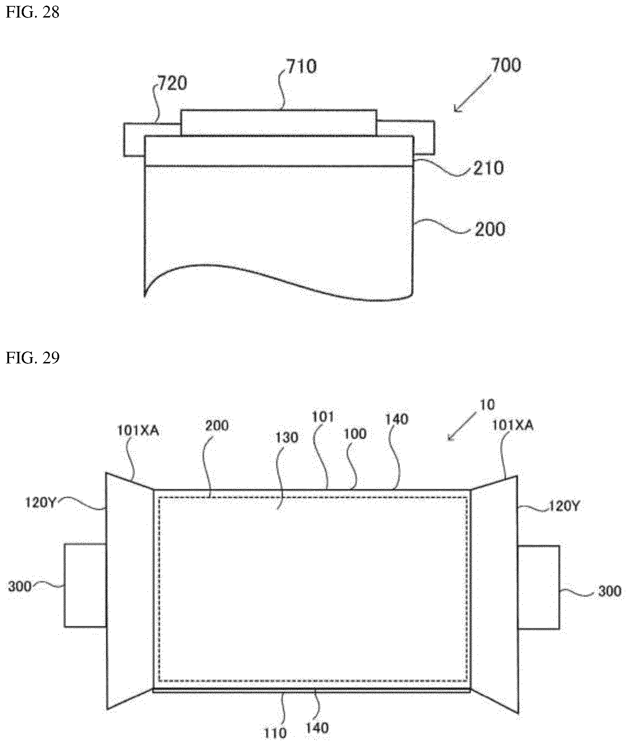

Fig. 28 is a front view of a lid 700 which is another modification of the lid 400 in Embodiment 2. The lid 700 includes a metal portion 710 formed of a metal material, and a non-metal portion 720 connected to the metal portion 710 and formed of a resin material. The metal portion 710 is welded to the electrode 210 of the electrode assembly 200. In the example shown in Fig. 28, the metal portion 710 of the lid 700 functions as an electrode terminal, so that a space between the lid 700 and the electrode 210 becomes unnecessary. Therefore, it is possible to downsize the electrical storage device 10X (see Fig. 9).

<5-7>
In Embodiment 1, the second seal portion 120 is formed by folding the exterior member 101 and heat-sealing the heat-sealable resin layers of the exterior member 101. However, the method for forming the second seal portion 120 is not limited thereto. Fig. 29 is a plan view schematically showing the electrical storage device 10 including a second seal portion 120Y in the modification. The exterior member 101 includes a bulging portion 101XA extending to the outside of the outer packaging 100, and the heat-sealable resin layers of the bulging portion 101XA are heat-sealed to form the second seal portion 120Y. In a portion of the bulging portion 101XA where the electrode terminal 300 is disposed, the heat-sealable resin layer of the bulging portion 101XA and the electrode terminal 300 are heat-sealed. According to this modification, the second seal portion 120Y can be more firmly heat-sealed, so that the sealing property of the outer packaging 100 is enhanced. In this modification, regions of the bulging portion 101XA other than the portion heat-sealed to the electrode terminal 300 may be cut if necessary. This modification can also be applied to the modification shown in Fig. 22.

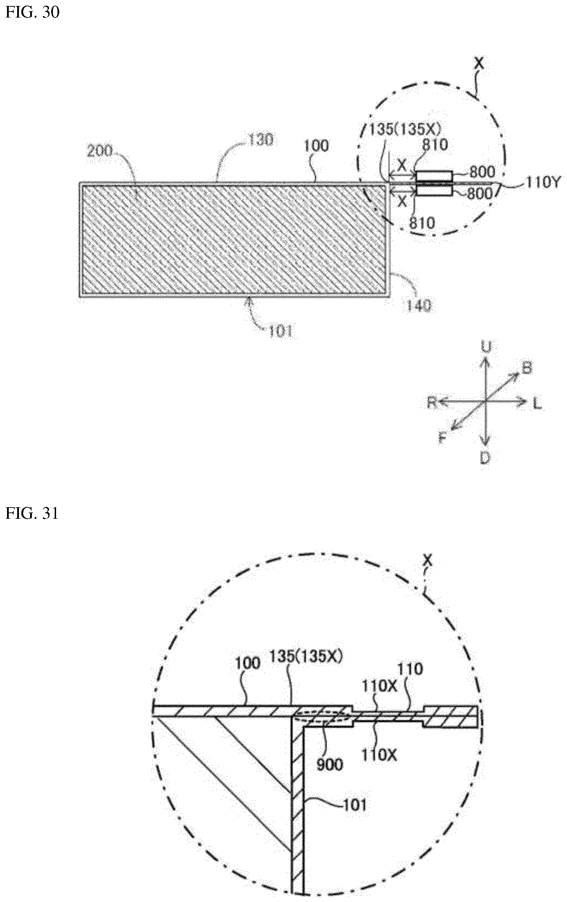

<5-8>
In Embodiment 1, the method for forming the first seal portion 110 can be arbitrarily selected. As shown in Fig. 30, For example, the manufacturing apparatus may form the first seal portion 110 by pressing a seal bar 800 at a location at a distance from a root 135X of a portion 110Y of the outer packaging 100 where the first seal portion 110 is to be formed in step S110 (see Fig. 8). In this manufacturing method, a concave portion 110X which is a trace of being pressed by the seal bar 800 is formed in the first seal portion 110 as shown in Fig. 31. In a portion of the outer packaging 100 where the concave portion 110X is formed, the opposed surfaces (heat-sealable resin layers) of the exterior member 101 are directly joined. A polymer sump 900 in which a part of resin forming the exterior member 101 is dissolved out is formed between the opposed surfaces of the exterior member 101 between the concave portion 110X and the root 135X in the outer packaging 100. In a portion between the concave portion 110X and the root 135X in the outer packaging 100, the opposed surfaces (heat-sealable resin layers) of the exterior member 101 are joined with the polymer sump 900 interposed therebetween. That is, in this modification, the first seal portion 110 includes a portion where the opposed surfaces of the exterior member 101 are directly joined and a portion where the opposed surfaces of the exterior member 101 are joined with the poly sump 900 interposed therebetween. Since ingress of water vapor and the like into the outer packaging 100 from the outside is prevented by the polymer sump 900, the barrier property of the outer packaging 100 is improved. When the seal bar 800 is pressed against the portion 110Y, it is necessary that the opposed surfaces of the exterior member 101 in a portion where the poly sump 900 is formed, in other words, a portion between the concave portion 110X and the root 135X be in contact with each other.

It is possible to arbitrarily select a distance X between the root 135X and an edge 810 of the seal bar 800 in a LR direction, in other words, a distance between the root 135X and the concave portion 110X in the LR direction. From the viewpoint of forming the polymer sump 900 over a wider area, the distance X is, for example, preferably 1 mm or more, more preferably 1.5 mm or more, still more preferably 1.7 mm or more. From the viewpoint of compactly forming the first seal portion 110, the distance X is, for example, preferably 10 mm or less, more preferably 5 mm or less, still more preferably 3 mm or less. The distance X is preferably in the range of, for example, about 1 mm or more and 10 mm or less, about 1 mm or more and 5 mm or less, about 1 mm or more and 3 mm or less, about 1.5 mm or more and 10 mm or less, about 1.5 mm or more and 5 mm or less, about 1.5 mm or more and 3 mm or less, about 1.7 mm or more and 10 mm or less, about 1.7 mm or more and 5 mm or less, or about 1.7 mm or more and 3 mm or less. For example, the distance X is most preferably 2 mm. The distance X may be substantially 0. When the distance X is substantially 0, the seal bar 800 is pressed against the outer packaging 100 in such a manner that the root 135X and the edge 810 of the seal bar 800 are substantially coincident with each other. The term "substantially coincident" includes a case where the root 135X and the edge 810 of the seal bar 800 are completely coincident with each other, and a case where there is a slight difference between the locations of the root 135X and the edge 810 of the seal bar 800 due to, for example, errors during manufacturing. Thus, the phrase "the distance X is substantially 0" includes, for example, a case where the distance X is less than 1 mm. These modifications can also be applied to Embodiments 2 to 4. Depending on a shape of a portion of the concave portion 110X which corresponds to the edge 810 of the seal bar 800, there may be a situation in which the distance between the root 135X and the concave portion 110X is not constant. In such a case, a distance between the center of the concave portion 110X and the center of the root 135X in the FB direction may be taken as the distance X. In another example, the distance X may be calculated on the basis of an average of a plurality of values including a maximum value and a minimum value of the distance between the root 135X and the concave portion 110X. Also, depending on a shape of the root 135X, there may be a situation in which the distance between the root 135X and the concave portion 110X is not constant. In such a case, a distance between the center of the root 135X and the center of the concave portion 110X in the FB direction may be taken as the distance X. In another example, the distance X may be calculated on the basis of an average of a plurality of values including a maximum value and a minimum value of the distance between the concave portion 110X and the root 135X.

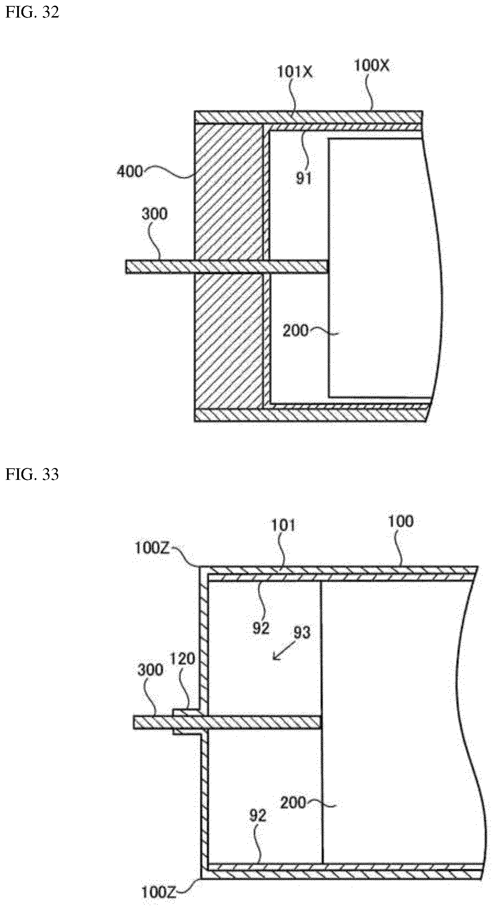

In Embodiment 2, the outer packaging 100X may include a barrier film 91 which suppresses permeation of an electrolytic solution as shown in Fig. 32. It is preferable that the barrier film 91 is disposed at least between the inner surface of the exterior member 101X and the electrode assembly 200. It is preferable that the barrier film 91 is joined to the inner surface of the exterior member 101X. The barrier film 91 is preferably a material permeable to gas generated in the outer packaging 100X. The material for forming the barrier film 91 is, for example, a resin film, a porous film or the like. Since the outer packaging 100X includes the barrier film 91, it is possible to suppress degradation of the exterior member 101X by an electrolytic solution.

In Embodiment 1, the outer packaging 100 may include a buffering film 92 for enhancing the strength of the exterior member 101 as shown in Fig. 33. It is preferable that the buffering film 92 is disposed on at least a corner 100Z of the outer packaging 100 of the exterior member 101. Since the outer packaging 100 includes the buffering film 92, generation of pinholes in the outer packaging 100 can be suppressed. The material for forming the buffering film 92 is, for example, a polyester-based material, a polyolefin-based material, a fluorine-based material, or the like. In this modification, the second seal portion 120 may be formed by joining the inner surface of the exterior member 101 and the electrode terminal 300 as shown in Fig. 33. It is preferable that a space 93 between the second seal portion 120 and the electrode assembly 200 is filled with an electrolytic solution.

In Embodiment 1, an adhesion film that is bonded to both metal and resin may be disposed between the electrode terminal 300 and the exterior member 101, but in other embodiments, an adhesion film may also be disposed.

In Embodiment 2, an adhesion film which is bonded to both metal and resin and which is the same as in Embodiment 1 may be disposed between the lid 400 and the electrode terminal 300 and the exterior member 101, but in other embodiments, an adhesion film may also be disposed.

### [6. Supplementary matters]

The embodiments described above include the following technical matters.

An electrical storage device according to an aspect 1A of the present invention includes an electrode assembly, an outer packaging, an electrode terminal, and a lid. The outer packaging seals the electrode assembly. The electrode terminal is electrically connected to the electrode assembly. The electrode terminal is attached to the lid. The outer packaging includes a film-shaped exterior member. The outer packaging includes a first seal portion sealed by joining the opposed surfaces of the exterior member wound around the electrode assembly, a second seal portion of being joined to the lid, a first surface, and a second surface. An area of the first surface is larger than an area of the second surface. The first seal part does not overlap the first face in plan view. The lid includes a first surface facing the electrode assembly and a second surface on a side opposite to the first surface. The second seal portion includes a portion where the outer packaging and the second surface of the lid are joined.

In this electrical storage device, the first seal portion does not overlap the first surface with a large area in plan view. That is, the first seal portion does not exist on the first surface with a large area. Therefore, even if just above or beside the electrical storage device, another electrical storage device is disposed on the first surface, the other electrical storage device does not tilt. As a result, the electrical storage device enables suppression of unevenness of the distribution of pressure applied to an adjacent electrical storage device when a plurality of electrical storage devices are stacked.

An electrical storage device according to an aspect 2A of the present invention includes an electrode assembly, an outer packaging that seals the electrode assembly, and a lid. The outer packaging includes a film-shaped exterior member. The outer packaging includes a first seal portion sealed by joining the opposed surfaces of the exterior member wound around the electrode assembly, a second seal portion of being joined to the lid, a first surface, and a second surface. An area of the first surface is larger than an area of the second surface. The first seal part does not overlap the first face in plan view. The lid includes a metal portion which is a portion where a metal layer is exposed to a surface, or a portion formed of a metal material. The metal portion and the electrode assembly are welded.

In this electrical storage device, the first seal portion does not overlap the first surface with a large area in plan view. That is, the first seal portion does not exist on the first surface with a large area. Therefore, even if just above or beside the electrical storage device, another electrical storage device is disposed on the first surface, the other electrical storage device does not tilt. As a result, the electrical storage device enables suppression of unevenness of the distribution of pressure applied to an adjacent electrical storage device when a plurality of electrical storage devices are stacked.

An electrical storage device according to an aspect 3A of the present invention may be the electrical storage device according to the aspect 1A or 2A, in which the first seal portion is bent so as to come into contact with the second surface of the outer packaging.

An electrical storage device according to an aspect 4A of the present invention may be the electrical storage device according to the aspect 3A, in which the first seal portion covers substantially the entire second surface in a state of being bent so as to come into contact with the second surface of the outer packaging.

In this electrical storage device, a large connection width can be secured in the first seal portion because the first seal portion covers substantially the entire second surface.

An electrical storage device according to an aspect 5A of the present invention may be the electrical storage device according to any one of aspects 1A to 4A, in which a region with a high joining force between the surfaces and a region with a low joining force between the surfaces are arranged along a boundary between the first surface and the second surface of the outer packaging in the first seal portion.

An electrical storage device according to an aspect 6A of the present invention may be the electrical storage device according to any one of aspects 1A to 4A, in which a region with a large thickness and a region with a small thickness are arranged along a boundary between the first surface and the second surface of the outer packaging in the first seal portion.

An electrical storage device according to an aspect 7A of the present invention may be the electrical storage device according to any one of aspects 1A to 6A, in which the direction along the boundary between the first surface and the second surface of the outer packaging is a direction perpendicular to a machine direction of the exterior member.

In this electrical storage device, the direction along the boundary is a direction perpendicular to the machine direction of the exterior member when the first seal portion is bent along the boundary. Therefore, in this electrical storage device, it is possible to reduce a possibility that the first seal portion is broken by bending of the first seal portion because the exterior member is unlikely to break even if a fold line is formed in a direction perpendicular to the machine direction of the exterior member.

An electrical storage device according to an aspect 8A of the present invention includes an electrode assembly, an outer packaging, an electrode terminal, and a lid. The outer packaging seals the electrode assembly. The electrode terminal is electrically connected to the electrode assembly. The electrode terminal is attached to the lid. In the outer packaging, the exterior member includes a film-shaped exterior member. The outer packaging includes a piece portion formed by joining the edges of the opposed surfaces of the outer packaging wound around the electrode assembly, and a second seal portion sealed with the outer packaging joined to the lid. In the piece portion, a space is formed in which the opposed surfaces are not joined. In the piece portion, a region where the opposed surfaces are joined and a region where the opposed surfaces are not joined are arranged in the vicinity of the boundary. The lid includes a first surface facing the electrode assembly and a second surface on a side opposite to the first surface. The second seal portion includes a portion where the outer packaging and the second surface of the lid are joined.

Gas may be generated in the outer packaging. In this electrical storage device, a space is formed in the piece portion, and a region where the opposed surfaces are joined and a region where the opposed surfaces are not joined are arranged in the vicinity of the boundary between surfaces. Therefore, in this electrical storage device, gas in the outer packaging can be discharged through the piece portion by releasing the outer packaging from the sealed state in the piece portion. By sealing the outer packaging again, the electrical storage device cleared of gas can be manufactured.

An electrical storage device according to an aspect 9A of the present invention includes an electrode assembly, an outer packaging, and a lid. The outer packaging seals the electrode assembly. In the outer packaging, the exterior member includes a film-shaped exterior member. The outer packaging includes a piece portion formed by joining the edges of the opposed surfaces of the outer packaging wound around the electrode assembly, and a second seal portion sealed with the outer packaging joined to the lid. In the piece portion, a space is formed in which the opposed surfaces are not joined. In the piece portion, a region where the opposed surfaces are joined and a region where the opposed surfaces are not joined are arranged in the vicinity of the boundary. The lid includes a metal portion which is a portion where a metal layer is exposed to a surface, or a portion formed of a metal material. The metal portion and the electrode assembly are welded.

Gas may be generated in the outer packaging. In this electrical storage device, a space is formed in the piece portion, and a region where the opposed surfaces are joined and a region where the opposed surfaces are not joined are arranged in the vicinity of the boundary between surfaces. Therefore, in this electrical storage device, gas in the outer packaging can be discharged through the piece portion by releasing the outer packaging from the sealed state in the piece portion. By sealing the outer packaging again, the electrical storage device cleared of gas can be manufactured.

An electrical storage device according to an aspect 10A of the present invention may be the electrical storage device according to any one of aspects 1A to 9A, in which the exterior member includes a laminate including at least a base material layer, a barrier layer and a heat-sealable resin layer in the stated order, and a tensile elastic modulus of the heat-sealable resin layer is within the range of 500 MPa or more and 1,000 MPa or less as measured in accordance with the provisions of JIS K7161: 2014.

An electrical storage device according to an aspect 11A of the present invention may be the electrical storage device according to any one of aspects 1A to 10A, in which the exterior member includes a laminate including at least a base material layer, a barrier layer and a heat-sealable resin layer in the stated order, and a piercing strength of the laminate pierced from the base material layer side is 30N or more as measured by a method conforming to the provisions of JIS Z1707: 1997.

An electrical storage device according to an aspect 12A of the present invention may be the electrical storage device according to any one of aspects 1A to 11A, in which the exterior member includes a laminate including at least a base material layer, a barrier layer and a heat-sealable resin layer in the stated order, and a contact angle of a surface on the base material layer side is 80° or less.

A method for manufacturing an electrical storage device according to an aspect 13A of the present invention is a method for manufacturing an electrical storage device from an incomplete article. The incomplete article includes an electrode assembly, an outer packaging, an electrode terminal, and a lid. The outer packaging seals the electrode assembly. The electrode terminal is electrically connected to the electrode assembly. The electrode terminal is attached to the lid. The outer packaging includes a film-shaped exterior member. The outer packaging includes a piece portion formed by joining the edges of the opposed surfaces of the exterior member wound around the electrode assembly, and a second seal portion sealed with the outer packaging joined to the lid. In the piece portion, a space is formed in which the opposed surfaces are not joined. In the piece portion, a region where the opposed surfaces are joined and a region where the opposed surfaces are not joined are arranged in the vicinity of the boundary. The lid includes a first surface facing the electrode assembly and a second surface on a side opposite to the first surface. The second seal portion includes a portion where the outer packaging and the second surface of the lid are joined. The manufacturing method includes the steps of releasing the outer packaging from the sealed state in the piece to discharge gas to the outside of the outer packaging, and sealing the outer packaging again by joining the opposed surfaces in at least a part of the piece portion.

By this method for manufacturing an electrical storage device, an electrical storage device cleared of gas can be manufactured by discharging gas through the piece portion and sealing the outer packaging again.

A method for manufacturing an electrical storage device according to an aspect 14A of the present invention is a method for manufacturing an electrical storage device from an incomplete article. The incomplete article includes an electrode assembly, an outer packaging, and a lid. The outer packaging seals the electrode assembly. The outer packaging includes a film-shaped exterior member. The outer packaging includes a piece portion formed by joining the edges of the opposed surfaces of the exterior member wound around the electrode assembly, and a second seal portion sealed with the outer packaging joined to the lid. In the piece portion, a space is formed in which the opposed surfaces are not joined. In the piece portion, a region where the opposed surfaces are joined and a region where the opposed surfaces are not joined are arranged in the vicinity of the boundary. The lid includes a metal portion which is a portion where a metal layer is exposed to a surface, or a portion formed of a metal material. The metal portion and the electrode assembly are welded. The manufacturing method includes the steps of releasing the outer packaging from the sealed state in the piece to discharge gas to the outside of the outer packaging, and sealing the outer packaging again by joining the opposed surfaces in at least a part of the piece portion.

By this method for manufacturing an electrical storage device, an electrical storage device cleared of gas can be manufactured by discharging gas through the piece portion and sealing the outer packaging again.

### DESCRIPTION OF REFERENCE SIGNS

10, 10X, 10XA, 10Y, 10Z: Electrical storage device
100, 100X, 100Y: Outer packaging
101, 101Y, 101Z1, 101Z2: Exterior member
101A: Base material layer
101B: Barrier layer
101C: Heat-sealable resin layer
101Z: Laminate
101X: Bulging portion
110, 110Z, 154: First seal portion
110X: Concave portion
120, 120X, 120Y: Second seal portion
130, 130Z: First surface
135, 135Z: Side
135X: Root
140, 140Z: Second surface
150: Piece portion
151: Joined region
152: Space
153: Non-joined region
200: Electrode assembly
210: Electrode
215: Current collector
300: Electrode terminal
500A: First surface
500B: Second surface
400, 500, 700: Lid
610, 710: Metal portion
800: Seal bar
C 1: Corner

## Claims

1. An electrical storage device comprising:
an electrode assembly; and
an outer packaging that seals the electrode assembly, wherein
the outer packaging includes a film-shaped exterior member,
the outer packaging includes a first seal portion sealed by joining opposed surfaces of the exterior member wound around the electrode assembly, a first surface, and a second surface,
an area of the first surface is larger than an area of the second surface, and
the first seal portion does not overlap the first surface in plan view.

2. The electrical storage device according to claim 1, wherein the first seal portion is bent so as to come into contact with the second surface.

3. The electrical storage device according to claim 2, wherein the first seal portion covers substantially the entire second surface in a state of being bent so as to come into contact with the second surface.

4. The electrical storage device according to any one of claims 1 to 3, further comprising an electrode terminal electrically connected to the electrode assembly, wherein
the outer packaging further includes a second seal portion sealed with the electrode terminal held therein,
a part of the electrode terminal is located outside the outer packaging, and
a root of the part is located to extend over substantially half a thickness of the electrical storage device in a thickness direction of the electrical storage device.

5. The electrical storage device according to any one of claims 1 to 3, wherein a region with a high joining force between the surfaces and a region with a low joining force between the surfaces are arranged along a boundary between the first surface and the second surface in the first seal portion.

6. The electrical storage device according to any one of claims 1 to 3, wherein a thin region and a thick region are arranged along a boundary between the first surface and the second surface in the first seal portion.

7. The electrical storage device according to any one of claims 1 to 3, further comprising an electrode terminal electrically connected to the electrode assembly, wherein
the first seal portion is sealed with the electrode terminal held therein.

8. The electrical storage device according to any one of claims 1 to 3, further comprising:
an electrode terminal electrically connected to the electrode assembly; and
a lid to which the electrode terminal is attached, wherein
the outer packaging further includes a second seal portion sealed in a state of being joined to the lid.

9. The electrical storage device according to claim 8, wherein
the lid includes a first surface facing the electrode assembly, and a second surface on a side opposite to the first surface, and
the second seal portion includes a portion where the outer packaging and the second surface are joined.

10. The electrical storage device according to claim 8, wherein
the lid includes a first portion and a second portion,
the electrode terminal is held between the first portion and the second portion, and
a ratio of a width of the electrode terminal to a width of the lid is 50% or more.

11. The electrical storage device according to any one of claims 1 to 3, wherein
the outer packaging includes a barrier film suppressing permeation of an electrolytic solution, and
the barrier film is disposed at least between an inner surface of the exterior member and the electrode assembly.

12. The electrical storage device according to any one of claims 1 to 3, wherein
the outer packaging includes a buffering film for enhancing a strength of the exterior member, and
the buffering film is disposed on at least a corner of the outer packaging of the inner surface of the exterior member.

13. The electrical storage device according to any one of claims 1 to 3, further comprising a lid, wherein
the outer packaging further includes a second seal portion sealed in a state of being joined to the lid,
the lid includes a metal portion that is a portion where a metal layer is exposed to a surface thereof or a portion formed of a metal material, and
the metal portion and the electrode assembly are welded to each other.

14. The electrical storage device according to any one of claims 1 to 3, further comprising an electrode terminal electrically connected to the electrode assembly, wherein
the outer packaging further includes a bulging portion protruding outward, and a second seal portion sealed by the bulging portion with the electrode terminal held therein.

15. The electrical storage device according to any one of claims 1 to 3, wherein a direction along a boundary between the first surface and the second surface is a direction perpendicular to a machine direction of the exterior member.

16. The electrical storage device according to any one of claims 1 to 3, wherein
the first seal portion has a concave portion that is a trace of being pressed by a seal bar, and
the concave portion is formed at a distance from a root of the first seal portion.

17. An electrical storage device comprising:
an electrode assembly;
an electrode terminal electrically connected to the electrode assembly; and
an outer packaging that seals the electrode assembly, wherein
the outer packaging includes a film-shaped exterior member, and has a long side and a short side in plan view, and
the electrode terminal is disposed along the long side.

18. An electrical storage device comprising:
an electrode assembly; and
an outer packaging that seals the electrode assembly, wherein
the outer packaging includes a film-shaped exterior member,
the outer packaging includes a piece portion formed by joining peripheral edges of opposed surfaces of the exterior member wound around the electrode assembly,
a space in which the opposed surfaces are not joined is formed in the piece portion, and
a region in which the opposed surfaces are joined and a region in which the opposed surfaces are not joined are arranged near a boundary between the surfaces in the piece portion.

19. A method for manufacturing an electrical storage device from an incomplete article,
the incomplete article comprising:
an electrode assembly; and
an outer packaging that seals the electrode assembly, wherein
the outer packaging includes a film-shaped exterior member,
the outer packaging includes a piece portion formed by joining peripheral edges of opposed surfaces of the exterior member wound around the electrode assembly,
a space in which the opposed surfaces are not joined is formed in the piece portion, and
a region in which the opposed surfaces are joined and a region in which the opposed surfaces are not joined are arranged near a boundary between the surfaces in the piece portion,
the method comprising the steps of:
releasing the outer packaging from the sealed state in the piece portion to discharge gas to outside of the outer packaging, and
sealing the outer packaging again by joining the opposed surfaces in at least a part of the piece portion.

20. A method for manufacturing an electrical storage device, wherein
the electrical storage device includes:
an electrode assembly; and
an outer packaging that seals the electrode assembly,
the outer packaging includes a film-shaped exterior member,
the outer packaging includes a first seal portion sealed by joining opposed surfaces of the exterior member wound around the electrode assembly,
an area of the first surface is larger than an area of the second surface,
the first seal portion does not overlap the first surface in plan view, and
the method for manufacturing an electrical storage device comprises the step of forming the first seal portion by pressing a seal bar at a location at a distance from a root of a portion of the outer packaging where the first seal portion is to be formed.

21. A method for manufacturing an electrical storage device, wherein
the electrical storage device includes:
an electrode assembly; and
an outer packaging that seals the electrode assembly,
the outer packaging includes a film-shaped exterior member,
the outer packaging includes a first seal portion sealed by joining opposed surfaces of the exterior member wound around the electrode assembly,
an area of the first surface is larger than an area of the second surface,
the first seal portion does not overlap the first surface in plan view, and
the method for manufacturing an electrical storage device comprises the step of forming the first seal portion by pressing a seal bar in such a manner that an edge of the seal bar is substantially coincident with a root of a portion of the outer packaging where the first seal portion is to be formed.

22. A method for manufacturing an electrical storage device, wherein
the electrical storage device includes:
an electrode assembly;
an electrode terminal electrically connected to the electrode assembly; and
a lid having a hole into which the electrode terminal is inserted, and
the method for manufacturing an electrical storage device comprises the steps of:
electrically connecting the electrode assembly and the electrode terminal;
manufacturing the lid; and
inserting the electrode terminal connected to the electrode assembly into the hole of the lid.

23. A method for manufacturing an electrical storage device, wherein the electrical storage device includes:
an electrode assembly;
an electrode terminal electrically connected to the electrode assembly; and
a lid joined to the electrode terminal, and
the method for manufacturing an electrical storage device comprises the steps of:
electrically connecting the electrode assembly and the electrode terminal; and
insert-molding the lid in the electrode terminal connected to the electrode assembly.
